# EUROPEAN PATENT APPLICATION

(11) **EP 4 252 890 A1**
(43) Date of publication of application: **04.10.2023**
(21) Application number: 22165357.9
(22) Date of filing: 30.03.2022
(51) Int. Cl.: B01D 53/94, B01J 23/63, B01J 23/652, B01J 29/67, B01J 35/00, B01J 35/04, F01N 3/10

(54) **CATALYST ARTICLE FOR OXIDATION, ADSORPTION AND DESORPTION REACTIONS**

(71) Applicant: Dinex A/S, 5500 Middelfart (DK)
(72) Inventor: Väliheikki, Ari, 5500 Middelfart (DK); Maunula, Teuvo, 5500 Middelfart (DK); Wollf, Thomas, 5500 Middelfart (DK)
(74) Representative: Nex & Phister Law & IP Aps

(57) **Abstract**

The present invention relates to an catalyst article, comprising platinum group metal (PGM) elements, such as platinum (Pt) and palladium (Pd), and porous support materials such as aluminum oxide (Al₂O₃), silicon oxide (SiO₂), titanium oxide (TiO₂) and optionally comprising other metal oxides and promoters, which can be used for making a catalyst article for oxidizing carbon monoxide (CO), hydrocarbons (HCs), hydrogen (H₂) and nitrogen oxide (NOₓ) emissions, the article further suitable for use as a temporary NOₓ and hydrocarbon storage for reduction of total NOₓ and hydrocarbon emissions. The invention describes the contents of the catalyst article and how to utilize a such catalyst article in purifying exhaust gas emissions.

## Description

### TECHNICAL FIELD

The present invention relates to an catalyst article, comprising platinum group metal (PGM) elements, such as platinum (Pt) and palladium (Pd), and porous support materials such as aluminum oxide (Al₂O₃), silicon oxide (SiO₂), titanium oxide (TiO₂) and optionally comprising other metal oxides and promoters, which can be used for making a catalyst article for oxidizing carbon monoxide (CO), hydrocarbons (HCs), hydrogen (H₂) and nitrogen oxide (NOₓ) emissions, the article further suitable for use as a temporary NOₓ and hydrocarbon storage for reduction of total NOₓ and hydrocarbon emissions. The invention describes the contents of the catalyst article and how to utilize a such catalyst article in purifying exhaust gas emissions.

### BACKGROUND

While diesel engines operate under lean conditions (λ > 1), nevertheless exhaust gases emitted from lean burn engines will comprise residual amounts of hydrocarbons (HCs), and carbon monoxide (CO). For controlling the emission harm, these HCs and CO compounds are typically oxidized in diesel oxidation catalysts (DOC) to less harmful exhaust compounds such as carbon dioxide (CO₂) and water (H₂O). Also, and besides these exhaust gas components, nitrogen oxides (NOₓ) and particulate matter (PM) are emitted from lean burn engines. Due to demands for low carbon dioxide (CO₂) emissions (i.e., lower fuel consumption and temperatures) in light-duty and heavy-duty lean applications, and increasingly stricter emission limits for pollutants set by government authorities, there exists a continuous need for improved catalyst systems in the art.

Although NOₓ and particulate matter (PM) typically are removed by exhaust gas aftertreatment units, e.g., NOₓ by urea by selective catalytic reduction (SCR) and particulate matter (PM) by diesel particulate filters (DPF); selective catalytic reduction (SCR) and particulate matter (PM) oxidation are boosted by nitrogen dioxide (NO₂), which again can be formed by nitric oxide (NO) oxidation on diesel oxidation catalysts (DOC).

In the art, it is further known to apply lean NOₓ traps (LNT) with exhaust, which is lean in average, for storing NOₓ in long lean periods and reducing the exhaust periodically in short rich (λ < 1, e.g., 2 - 5 s) periods. Due to fuel economy and for obtaining compact systems without additional reductants, lean NOₓ traps (LNT) have provided more popular in light-duty diesel and gasoline applications than in heavy-duty diesel applications.

In the art, combinations of lean NOₓ traps (LNT) and selective catalytic reduction (SCR) units have also been introduced wherein e.g., an excess of ammonia (NH₃) formed during rich periods on lean NOₓ traps (LNT) is utilized in selective catalytic reduction (SCR) units downstream of the lean NOₓ traps (LNT). In removal of total NOₓ emissions, passive NOₓ adsorbers (PNA) can storage NOₓ compounds present in upstream of the selective catalytic reduction (SCR) catalyst temporary and subsequently release the stored NOₓ compounds at temperatures, where selective catalytic reduction (SCR) reactions are favorable, e.g., above 200°C.

As the temperature of diesel exhaust gases typically is in the range of 100 - 500 °C, depending on driving conditions, high CO and hydrocarbon (HC) oxidation activity of a catalyst is needed for avoiding cold-start emissions due to insufficient catalyst warmup. In general, carbon, which is present in particulate matter (PM), is passively regenerated in diesel particulate filters (DPF) continuously with NO₂ (C + NO₂, slow reaction) already at low temperatures (< 230°C) or actively (C + O₂, fast reaction) by periodical fuel (hydrocarbon) injection and throttling to increase the temperature up to carbon oxidation temperatures (about 600°C). Depending on the active diesel particulate filter (DPF) regeneration strategy chosen, high hydrocarbon concentrations of e.g., 0.5 - 2.0 volume-%, in exhaust gases increase the hydrocarbon light-off temperature (T₅₀) on DOC. A high hydrocarbon concentration is known to inhibit CO, hydrocarbon, and NO oxidation and the hydrocarbon light-off temperatures are increased significantly with up to about 50 - 100 °C in comparison to normal diesel exhaust gas conditions (@ < 500 ppm hydrocarbons). Also, high NO to NO₂ oxidation activity at low temperatures (< 230°C) are needed for enabling a high performance in selective catalytic reduction (SCR). High CO, hydrocarbon, and NO oxidation activities are required to meet the current emissions limits and predefined engineering targets.

When a diesel engine is running close to maximum power, temperatures are typically above 400 - 500 °C. Especially during active catalyst regeneration, the temperature of the exhaust gas is high. Even in controlled diesel particulate filter (DPF) regeneration conditions, where temperatures commonly should not exceed 650°C, diesel oxidation catalysts (DOC) are still designed to withstand slight uncontrolled particulate matter (PM) oxidation or diesel particulate filter (DPF) regeneration with peak temperatures up to 700 - 800 °C without an increased loss of activity. Nevertheless, it is necessary that at the highest temperatures, catalysts retain good long-term stability for maintaining high catalytic activity over the catalyst's lifetime.

In the art it is known that platinum (Pt) has good oxidation activity for CO, hydrocarbon, and NO. However, the thermal durability of Pt is considered average compared to other alternatives known in the art. To increase the thermal durability of Pt, palladium (Pd) is often added to diesel exhaust gas catalysts. Pd is also a commonly used component in diesel oxidation catalysts (DOC) due to its good activity and selectivity towards oxidation of hydrocarbons and CO. Pt and Pd differ by the catalytic properties for different hydrocarbon types and their combination is normally considered necessary for exhaust gases having saturated/unsaturated and light/heavy hydrocarbons, including also oxygenated hydrocarbon. However, Pd is quite sensitive to deactivation in the presence of sulfur. Due to the high price of platinum group metals (PGMs), especially Pd, alternative materials for improving catalyst stability are desired.

The observation that Pt and Pd have different properties and activities in catalytic reactions under lean conditions lead early to the idea of having zoned catalytic materials in catalysts for combustion engines (US3947545, Toyota). Likewise, layered type catalysts are also well known in the art, c.f. e.g., GB1330842A wherein a catalyst is detailed comprising a metal oxide in a bottom layer and platinum group metals and metal oxides in a top layer.

The presence of sulfur compounds e.g., sulfur oxides (SOₓ), in exhaust gas streams is well known to affect the performance of after-treatment systems. Diesel oxidation catalysts (DOC) are commonly used as a first catalyst unit by flow direction in current aftertreatment systems. Sulfur compounds can react with the catalyst surfaces of diesel oxidation catalysts (DOC), making the catalyst less efficient in the removal of harmful exhaust gas components, e.g., CO, hydrocarbon, and NOₓ. Also, sulfur comprising particulates can be trapped on diesel particulate filters. Commonly, though, at high temperature conditions, such as above 500°C, such accumulated sulfur compounds can be released from the catalysts.

Diesel exhaust gas can comprise other impurities such as phosphorus, zinc, or silicon originating e.g., from lubricants, oils, and/or fuel. Also, such impurities can decrease the performance of catalytic systems and thus, the presence of such impurities in aftertreatment system units should be avoided. Contrary to sulfur, catalyst poisoning with other chemical elements and compounds is usually irreversible with the effect that the activity of the catalyst cannot be restored.

Apart from the effect of impurities present in exhaust gas streams, catalyst activity can also be decreased due to an exposure of the catalytic systems to high exhaust temperature conditions, e.g., above 800°C. The negative effects of high temperature conditions e.g., in the presence of water, can be partially avoided by utilizing suitably selected materials known in the art, and by improved preparation methods of catalyst manufacture. Also, minimizing exposure time at high temperature conditions reduces catalyst deactivation.

In the art, aluminum oxide (e.g. Al₂O₃), silicon oxide, (e.g. SiO₂), and/or their mixtures are well-known support materials used in catalysts for lean-operation applications. E.g., aluminum oxide is well-known as support material for providing high surface areas for platinum group metal (PGM) components. Silicon oxide, when used together with aluminum oxide, increases thermal and chemical stability of catalysts.

In the art, e.g., Si- (e.g., EP 0377290), Ti- (e.g., JP 4087627), Si-Ti- (e.g., US 5,145,825) and/or Zr- oxide supports are known for use in the provision of catalysts, which adsorb less sulfates and have been applied to catalysts for improving sulfur tolerance in diesel oxidation catalysts (DOC). The effect of various substituents as reaction promoters, such as Sc, Ti, Cr, Mn, Fe, Co, Cu, La, Au, Ag, Ga, In, Ce, V, Mo, W, Zr, Nb, Pr as well as zeolites in different roles have been proposed in the prior art (c.f. e.g., WO2004091782). Different reaction promoters can be tailored for PGM components or by particle size. PGM components can be tailored e.g., for zeolites or ceria. When aluminum (Al) and cerium (Ce) oxides are used in SOₓ adsorption, it has been shown possible to decompose sulfur-comprising species in moderate temperatures. When e.g., lanthanum (La), barium (Ba), and yttrium (Y) components are used, more stable sulfates are generated by catalysis, c.f. e.g., WO1993022050A1. Likewise, zeolites have been applied with aluminum and cerium oxides on Pt-DOCs since the 1990s, c.f. e.g., WO 9401926. In the art, tungsten (W) has been also used in emission catalysts in selective catalytic reduction (SCR) (V-W/TiO₂) and TWC, c.f. e.g., EP0056729.

Further, many different types of reaction promoters and PGM loadings/ratios have been proposed in the art for DOC, particularly as single compositions. However, many additives are reaction promoters for a certain property but have no or even negative effect on other properties. For example, an optimal composition for hydrocarbon light-off may be quite poor in NO oxidation, and likewise, best catalysts for NO oxidation may have limitations in hydrocarbon and CO oxidation. In addition, local PGM distribution/dispersion and mass/heat transfer has an important role in catalyst reaction chains and durability.

Considering the abovementioned complexities in catalyst design and due to stringent emission legislation, there is a need for developing oxidation and lean catalysts and aftertreatment systems (ATS) with improved performance and high cost-efficiency. To make that possible, the utilization of PGM components and relevant support material components is becoming more crucial to guarantee a good performance and long-term durability.

The catalyst article of the invention carries out catalytic reactions comprised in catalytic aftertreatment systems (ATS) to purify and oxidize exhaust gas emissions from engine lean combustion operation conditions. The catalyst article of the invention is used for the oxidation and removal of carbon monoxide (CO), hydrocarbons (HCs), hydrogen (H₂) and nitric oxide (NO) oxidation to nitrogen dioxide (NO₂) as well as enhancing nitrogen oxides (NOₓ) removal efficiency in such after-treatment systems. The catalyst article of the invention can also include NOₓ adsorption properties to store NOₓ emissions temporary in a designated location of the catalyst article to enable decreases in total NOₓ emissions measured after passage of the ATS. These catalytic functions, which in accordance with the invention are carried out by multiple layers and zones, can be applied in the same catalyst article.

### DEFINITIONS and ABBREVIATIONS

λ lambda, Air-fuel equivalence ratio
γ (gamma)
ASC Ammonia slip catalyst
ATS After-treatment system
BET Brunauer-Emmett-Teller, method for specific surface area calculation
CeOₓ Cerium oxide(s)
cpsi Cells per square inch
deNOₓ Removal of nitrogen oxides
DOC Diesel oxidation catalyst
DPF Diesel particulate filter
g/L unit for PGM, component or coating loading, grams of PGMs, components or coating per substrate volume as liters
HC Hydrocarbon(s)
HT Hydrothermal
HT700 Hydrothermal (aging) at 700°C
In-B Inlet bottom, inlet proximal
In-T Inlet Top, inlet distal
LaOₓ Lanthanum oxide(s)
LNT Lean NOₓ traps
NOₓ Nitrogen oxide(s)
Out-B Outlet bottom, outlet proximal
Out-T Outlet Top, outlet distal
PNA Passive NOₓ adsorber
PGM Platinum group metal
SAR Si/Al₂ ratio, molar
SCR Selective catalytic reduction
SGB Synthetic gas bench
SOₓ Sulfur oxide(s)
SV Space velocity
T₅₀ Light-off temperature, temperature when 50% conversion is achieved
TWC Three-way catalyst
WHTC World Harmonized Transient Cycle
WOₓ Tungsten oxide(s)
ZrOₓ Zirconium oxide(s)

### SUMMARY OF THE INVENTION

The present invention solves the above and below described problems both explicit and implicit and in particular concerns the following aspects and embodiments.

The present relates in a first aspect to a catalyst article for exhaust gas purification in lean exhaust gas conditions presenting a substrate surface, where on said substrate surface are presented an inlet and an outlet coating composition, defined by flow direction, wherein each respective inlet and outlet coating composition comprises at least a respective inlet and outlet proximal coating layer adhering to said substrate surface, and a respective inlet and outlet distal coating layer adhering to the respective inlet and outlet proximal coating layer; said respective coating layers comprise porous Al, Si and/or Ti oxide for diffusive exchange with an exhaust gas traversing for contacting said exhaust gas with said respective catalytic coating layers; wherein
- said inlet proximal (In-B) coating layer is placed at the inlet of the catalyst article and comprises one or more catalytically active metals selected from a platinum-group metal (PGM) comprising Pt, Pd, Rh, Ir, Ru, Os, or noble metals as Ag, or Au at a loading of less than 0.8 g/L
- said inlet distal (In-T) coating layer is placed at the inlet of the catalyst article comprises one or more catalytically active metals selected from a platinum-group metal (PGM) comprising Pt, Pd, Rh, Ir, Ru, Os, Ag, noble metals as Ag, or Au in at a loading of 0.5 - 7.0 g/L
- said outlet proximal (Out-B) coating layer is placed at the outlet of the catalyst article and comprises one or more catalytically active metals selected from a platinum-group metal (PGM) comprising Pt, Pd, Rh, Ir, Ru, Os, or noble metals as Ag, or Au at a loading of less than 0.8 g/L
- said outlet distal (Out-T) coating layer is placed at the outlet of the catalyst article and comprises one or more catalytically active metals selected from a platinum-group metal (PGM) comprising Pt, Pd, Rh, Ir, Ru, Os, or noble metals as Ag, or Au in an amount of 0.1 - 2.0 g/L;
- said outlet distal (Out-T) coating layer comprises tungsten (W), molybdenum (Mo), and/or zirconium (Zr) compounds, more preferably tungsten compounds, to promote NO oxidation to NO₂.

In an embodiment hereof the inlet and/or the outlet proximal (In-B and Out-B) coating layer comprises cerium (Ce) oxides or cerium mixed oxides, such as ZrCe, MnCe, TiCe, PrCe oxides, or their combinations, to promote NOₓ adsorption-desorption and NO₂ formation by desorption below 200°C. Typically, cerium (Ce) oxides or cerium mixed oxides, such as ZrCe, MnCe, TiCe, PrCe oxides, or their combinations, have a high surface area above 140 m²/g, preferably above 200 m²/g, more preferably above 230 m²/g. In a further embodiment cerium (Ce) oxides or cerium mixed oxides, such as ZrCe, MnCe, TiCe, PrCe oxides, or their combinations, are in form of solid particles which have a particle size (d₅₀) below 14 µm, preferably below 7 µm.

In a still further embodiment, the inlet and/or the outlet proximal (In-B and Out-B) coating layer comprises lanthanum (La), yttrium (Y) and hafnium (Hf) or a combination of them or promote NOₓ adsorption.

In a further embodiment, the inlet and/or the outlet proximal (In-B and Out-B) coating layer comprises Beta, ZSM-5, CHA, Fer and AEI zeolites or a combination of them to promote HC and NOₓ adsorption.

In a still further embodiment, middle coating layers, middle proximal (Mid-B) and middle distal (Mid-T), are created in between the inlet and outlet coating compositions.

In a further embodiment, inlet and/or the outlet proximal (In-B and Out-B) coating layers have a length of about 20 - 80% and more preferably about 50%; inlet and/or the outlet distal (In-T and Out-T) coating layers have a length of about 20 - 80%, preferably about 30 - 70%, more preferably 30 - 70% and In-T is longer than Out-T layer of total length of substrate.

In a still further embodiment, the amount of coating of each coating layer can be about 10 - 200 g/L, preferably about 40 - 100 g/L and more preferably about 50 - 80 g/L in all layers of catalyst article.

In a further embodiment, the Pt:Pd ratio in inlet distal (In-T) coating layer is in the range of 1:4 - 5:1, preferably 1:1 - 4:1, more preferably 2:1 - 3:1 and the Pt:Pd ratio in outlet distal (Out-T) coating layer is in the range of 3:1 - 30:1, preferably 4:1 - 15:1 and more preferably 5:1 - 10:1 or the Pt:Pd ratio in Out-T coating layer can be also 1:0 (Pt only, no Pd).

In a still further embodiment, the inlet distal (In-T) coating layer is more active in oxidation of carbon containing components than outlet distal (Out-T) coating layer, and Out-T coating layer is more active in oxidation of NO to NO₂ than In-T coating layer.

In a further aspect the present invention relates to a catalyst according to any one of the above embodiments and other embodiments described herein below which can be utilized in purification of exhaust gas emissions, which are lean in average, originating from the combustion of diesel, gasoline, biofuels, hydrogen, ammonia, natural gas and their combinations and which has an ability to oxidize hydrocarbons (HC), carbon monoxide (CO), hydrogen (H₂), ammonia (NH₃) and nitric oxide (NO) as well as adsorb and desorb nitrogen oxides (NOₓ), sulfur oxides (SOₓ), and hydrocarbons (HCs) or any combinations thereof in regular driving conditions and in particulate filter and catalyst regeneration conditions.

### BRIEF DESCRIPTION OF THE DRAWINGS

Figures 1 to 7 are illustrations of exemplary embodiments of the catalyst article of the invention. Figures 8 to 17 show experimental documentation for the technical benefits of the present invention.
Figure 1 shows the catalyst article of the invention comprising an inlet bottom (In-B) coating layer, outlet bottom (Out-B) coating layer, inlet top (In-T) coating layer, and outlet top (Out-T) coating layer which are adjacent and in top of each other.
Figure 2 shows the catalyst article of the invention comprising an inlet bottom (In-B) coating layer, outlet bottom (Out-B) coating layer, inlet top (In-T) coating layer, and outlet top (Out-T) coating layer, which are adjacent and in top of each other and coating lengths and thicknesses are varied.
Figure 3 shows the catalyst article of the invention comprising an inlet bottom (In-B) coating layer, outlet bottom (Out-B) coating layer which is same as In-B coating layer, inlet top (In-T) coating layer, and outlet top (Out-T) coating layer, which are adjacent and in top of each other.
Figure 4 shows the catalyst article of the invention comprising an inlet bottom (In-B) coating layer, outlet bottom (Out-B) coating layer which is same as In-B coating layer, inlet top (In-T) coating layer, and outlet top (Out-T) coating layer which is same as In-T coating layer, which are in top of each other.
Figure 5 shows the catalyst article of the invention comprising an inlet bottom (In-B) coating layer, middle bottom (Mid-B) coating layer, outlet bottom (Out-B) coating layer, inlet top (In-T) coating layer, middle top (Mid-T) coating layer, and outlet top (Out-T) coating layer, which are adjacent and in top of each other.
Figure 6 shows the catalyst article of the invention comprising an inlet bottom (In-B) coating layer outlet bottom (Out-B) coating layer, middle (Mid) coating layer, inlet top (In-T) coating layer, and outlet top (Out-T) coating layer, which are adjacent and in top of each other.
Figure 7 shows the catalyst article of the invention comprising an inlet bottom (In-B) coating layer, outlet bottom (Out-B) coating layer, inlet top (In-T) coating layer, outlet top (Out-T) coating layer and second top (2^{nd} top) coating layer, which are adjacent and in top of each other.
Figure 8 shows the NO oxidation to NO₂ (%) difference measured after W+Pt comprising layered catalyst article (example 1), W+Pt comprising single layer coating composition (example 2) and single layer REF (example 3) in diesel engine steady-state experiments.
Figure 9 shows the NO oxidation to NO₂ (%) difference measured after HT700 aged Pt+Pd+W comprising zoned/layered sample (Example 4) and Pt+ W comprising layered sample (Example 5) and Pt+Pd comprising layered sample (Example 6) in SGB tests.
Figure 10 shows the CO and THC light-off temperature (°C, T₅₀) difference measured in normal and regeneration conditions after HT700 aged Pt+Pd+W comprising zoned/layered sample (Example 4) and Pt+W comprising layered sample (Example 5) and Pt+Pd comprising layered sample (Example 6) in SGB tests.
Figure 11 shows the NO oxidation to NO₂ (%) difference measured after HT700 aged Pt+Pd+W containing zoned/layered sample (Example 7) and Pt+Pd containing zoned/layered sample (Example 8) in SGB tests.
Figure 12 shows NO oxidation to NO₂ (%) difference measured after HT700+SO₂ aged Pt+Pd+W containing zoned/layered sample (Example 7) and Pt+Pd containing zoned/layered sample (Example 8) in SGB tests.
Figure 13 shows the THC light-off temperature (°C, T50) difference measured in normal conditions over HT700 and HT700+SO₂ aged Pt+Pd+W containing zoned/layered sample (Example 7) and Pt+Pd containing zoned/layered sample (Example 8) in SGB tests.
Figure 14 shows the NO oxidation to NO₂ (%) difference measured after HT700 aged Pt+Pd+W containing zoned/layered sample (Example 9) and Pt+Pd containing zoned/layered sample (Example 10) in SGB tests.
Figure 15 shows the CO and THC light-off temperature (°C, T₅₀) difference measured in normal conditions over HT700 aged Pt+Pd+W containing zoned/layered sample (Example 9) and Pt+Pd containing zoned/layered sample (Example 10) in SGB tests.
Figure 16 shows the relative desorbed NOₓ (%) from fresh layered samples (Examples 11a-g) as a function of temperature.
Figure 17 shows the NO oxidation to NO₂ (%) difference measured after fresh layered samples (Examples 11h+11i, 11h+j, 11f+11i, 11f+11g, 11k+11j) in SGB tests.

It is to be understood, that the embodiments shown in the figures are for illustration of the present invention and cannot be construed as being limiting on the present invention. Unless otherwise indicated, the drawings are intended to be read (e.g., crosshatching, arrangement of parts, proportion, degree, etc.) together with the specification, and are to be considered a portion of the entire written description of this disclosure.

### DETAILED DESCRIPTION

The catalyst article of the invention presents a substrate surface, where inlet and an outlet coating composition, defined by flow direction, are presented in substrate surface. Inlet and outlet coating compositions comprise at least an inlet and outlet proximal (bottom) coating layers on the substrate surface. Inlet and outlet distal (top) coating layers adheres to inlet and outlet proximal (bottom) coating layers. Bottom and top coating layers are defined in respect of the substrate surface, not by gravimetry. A substrate forms a honeycomb structure and flow channels to keep a pressure drop low and to have high geometric surface for thin catalytic coating layers. Substrate surface is located on substrate walls and pores inside flow channels. Coating layers comprises porous Al, Si and/orTi oxide as support for active compounds and promoters for diffusive exchange with an exhaust gas traversing for contacting exhaust gas with catalytic coating layers.

Several coating layers have their specific roles to enable high performance of the catalyst article of the invention. The high performance is based on a composition of each layer and zone with varying platinum group metal (PGM) loading, Pt:Pd ratio, support composition and added promoters in the flow direction. The location of active compounds (PGMs) and promoters radially (bottom i.e. proximal; top i.e. distal) and axially (inlet, middle, outlet) in different coating layers has a key effect on the functionality and durability to avoid deactivation. The front (inlet) part of the catalyst article of the invention is mainly responsible of reaction initiations and oxidation of hydrocarbons, H₂ and CO. During diesel particulate filter (DPF) regeneration, hydrocarbon compounds which have lowest light-off temperature, e.g., unsaturated hydrocarbons with moderate carbon chain length or aromatic hydrocarbons, are oxidized fast at the front part. Also, during DPF regeneration, hydrocarbon compounds, which have highest light-off temperature e.g., saturated hydrocarbons with notably short or long carbon chain length, require a longer residence time, higher reaction temperature and a Pt-rich PGM composition and are thus oxidized at the rear (outlet) part of catalyst article. The whole axial and radial length of the catalyst article of the invention is utilized in oxidation of the different types of hydrocarbon compounds at low temperatures. The rear part of the catalyst article of the invention is also especially responsible of NO oxidation to NO₂, which improves soot oxidation in particulate filter (e.g. in DPF) and NOₓ reduction in selective catalytic reduction by ammonia or urea (NH₃or urea-SCR) or lean NOₓ trap (LNT) units. A catalyst article of the invention can also include properties for a promotion of NOₓ removal efficiency in the complete ATS by utilizing NOₓ adsorption and storage functionality as a tailored structure. NOₓ storage functions can be applied in same or preferably in the different layer, where oxidation reactions take place. Oxidation and adsorption functions can also be divided in two different catalyst articles of the invention with specific cell densities on substrates.

Specific metal oxide or zeolite compounds can be used as promoters to improve the performance of the catalyst article of the invention. These compounds are added into particular locations in the catalyst article of the invention to optimize their promotion. Tungsten (W) in the form of oxides, such as tungsten trioxide (WO₃), can be utilized in stabilizing Pt and improving the activity of the catalyst article of the invention in NO oxidation to NO₂. Tungsten (W) is a relatively cheap material compared to PGM components such as Pt and Pd and thus, a good substitute for them. Silicon (Si) and zirconium (Zr) compounds in the form oxides, such as silica (SiO₂) and zirconia (ZrO₂), can be utilized to avoid the adsorption of sulfur oxides (SOₓ) on the catalyst article of the invention, and thus, improve the activity and stability over the lifetime of the catalyst article of the invention. Lanthanum (La), hafnium (Hf), yttrium (Y) and cerium (Ce) compounds in a form of oxides, such as lanthana (La₂O₃), yttria (Y₂O₅), and ceria (e.g., CeO₂), can be utilized to improve adsorption of nitrogen oxides (NOₓ) on catalyst article, and thus, to decrease overall NOₓ emissions of ATS. Zeolites are used as hydrocarbon or NOₓ trapping agents on the tailored layers of the catalyst article to decrease hydrocarbon and NOₓ emissions during engine cold start.

The catalyst article includes several coating layers which all have their specific function in removal of exhaust gas components. All or most of platinum group metal (PGM) components, such as platinum (Pt), palladium (Pd), rhodium (Rh), iridium (Ir), ruthenium (Ru), osmium (Os), and noble metals such as silver (Ag) and gold (Au), preferably PGM components and more preferably Pt and Pd, in metal or oxide form are in the top layer in the main concept. The bottom coating layer has a low amount of PGMs, or it is free of PGM components in the main concept. The PGM loading (g/L, grams of PGMs per substrate volume as liters), and Pt:Pd ratio (mass ratio of Pt and Pd) is varied over the length of catalyst article. The amount of PGM components in the front (inlet) part of catalyst article is the same or higher as the amount of PGM components on the rear (outlet) part of catalyst article. Inlet (front) and outlet (rear) part/zone is defined by the exhaust gas flow direction. Pt:Pd ratio on the outlet part of catalyst article is the same or higher as the Pt:Pd ratio on the inlet part of catalyst article.

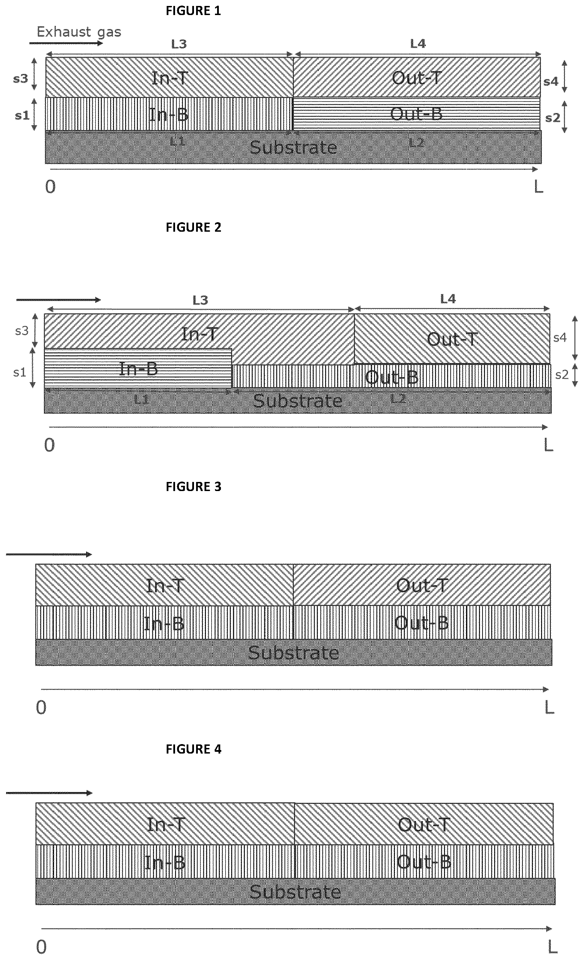

The PGM loading in catalyst article is defined primarily as volumetric values (grams of PGM per substrate volume as liters, g/L). It is possible to define PGM loading for the complete front and rear part of catalyst article as grams of PGM per volume of front (or rear) part of substrate. Front part of catalyst article can comprise two different coating layers, inlet-bottom (In-B) and inlet-top (In-T), inlet by flow direction, and rear part of catalyst article can comprise two other coating layers, outlet-bottom (Out-B) and outlettop (Out-T), outlet by flow direction as shown in e.g. Fig 1. It is possible to define PGM loading separately for top (distal) and bottom (proximal) layer in each location too. In In-T coating layer of catalyst article (Figs. 1-7), PGM loading is in the range of about 0.5 - 7.0 g/L, preferably 0.5 - 3.0 g/L and more preferably 0.8 - 1.5 g/L. Pt:Pd ratio in In-T coating layer of catalyst article is in the range of about 1:4 - 5:1, preferably 1:1 - 4:1, more preferably 2:1 - 3:1. It is important to have both Pt and Pd in In-T coating layer to have a low light-off temperature (T₅₀, temperature when 50% conversion is achieved) for hydrocarbon and CO as well as to reach a good stability towards thermal and hydrothermal aging. Pt and Pd are stabilizing each other by a close interaction and a bimetallic PtPd catalyst is better than single PGM catalysts.

In the Out-T coating layer of catalyst article, PGM loading is in the range of about 0.1 - 2.0 g/L, preferably 0.3 - 1.5 g/L and more preferably 0.5 - 1.2 g/L. Pt:Pd ratio in Out-T coating layer of catalyst article is in the range of about 3:1 - 30:1, preferably 4:1 - 15:1 and more preferably 5:1 - 10:1. The high Pt loading in the rear part ensures a high activity and durability in NO oxidation to NO₂ reaction. Optionally, the rear part of catalyst article can also be free of Pd. In the Out-T coating layer, the PGM loading is about same or preferably lower and Pt:Pd ratio about same or preferably higher than in In-T coating layer.

Underneath PGM comprising top layers, the catalyst article comprises In-B and Out-B coating layers, which can fill the corners of square-shape channels. The filling of the corners creates more round-shape flow channels, which have relatively a lower pressure drop than square-shape channels with the same hydraulic diameter. If bottom layer comprises at least one PGM, exhaust gas components such as hydrocarbons, CO and NOₓ should diffuse through the top layer to reach active sites in bottom layer. Mass transfer is faster when most of PGMs is used in top coating layers and exhaust gas components have faster contact on active sites (on PGM). Thus, all or most of PGMs is located in top layers. In 4-layer structure, the PGM loading in coating layers follow the order: In-T ≥ Out-T > In-B ≥ Out-B, preferably In-T > Out-T > In-B ≥ Out-B.

The composition of support, where PGM and promoters are added, can be varied by layers, consisting of porous metal oxides such as aluminum oxide e.g., alumina (Al₂O₃), silicon oxide (SiOₓ) e.g., silica (SiO₂), titanium oxide (TiOₓ) e.g., titania (TiO₂) or their mixtures and compounds. Possible promotes have been defined separately for each layer. In the main examples, main support material component has been alumina, which is preferably a y (gamma) form with a high surface area promoting active metal and promoter distribution. Silica and titania can be added in tailored ways in different layers to stabilize PGMs and alumina as well as promote certain reactions. Preferably, TiO₂ and SiO₂ are present on top layers (e.g., In-T and Out-T). TiOₓ and SiOₓ stabilizes aluminum oxides to improve sulfur durability and promote oxidation reactions on PGMs. In addition, TiOₓ is present preferably in inlet layers and SiOₓ in outlet layers. Ti oxides can decrease sulfur accumulation and increase sulfur recovery, which enables a flexible sulfur regeneration of catalyst article in use and regeneration (DPF, desulfation) conditions. Si oxides is preferably present in outlet layers, because together with alumina, Si oxides can have a promoting effect on NO₂ formation on Pt-rich compositions. The coating amount of each coating layer is in the range of about 10 - 200 g/L, preferably about 40 - 100 g/L and more preferably about 50 - 80 g/L in all layers of catalyst article. Respectively, the total coating amount in the front and rear parts is defined by the coating amount in In-B + In-T and Out-B + Out-T in four coating layers.

Besides alumina and PGM components, any coating layer can also optionally comprise other components such as tungsten oxides (WOₓ) and molybdenum oxides (MoOₓ), preferably WOₓ in outlet part of catalyst article, to improve activity of catalyst article and its durability towards impurities. WOₓ, such as WO₃, has a role to promote NO₂ formation in the Pt-rich Out-T coating layer. The amount of tungsten oxide as WO₃ is in the range of about 1 - 30 g/L, preferably 3 - 10 g/L in parts of catalyst article where used. The amount of WOₓ in a dry coating is varied in the range of 1 - 20 wt-% as WO₃ in a layer present.

Zirconium oxides e.g., zirconia (ZrO₂), can also be used to increase the stability of catalyst article and its resistance towards sulfur oxides and increase NO₂ formation. Zirconium is increasing the acidity and thus decreasing SOₓ adsorption on alumina-based support material. Zr can be present in all layers, but preferably it is in Out-T coating layer to promote and stabilize also NO₂ formation on Pt-rich outlet part. Total amount of ZrO₂ is in the range of about 1 - 30 g/L, preferably 3 - 10 g/L in parts of catalyst article where used. The amount of ZrO₂ in dry coating is varied in the range of 1 - 20 wt-% in a layer present.

Lanthanum oxides e.g., lanthana (La₂O₃), yttrium oxides e.g. yttria (Y₂O₅) or hafnium oxides (HfOₓ) to increase the NOₓ adsorption capacity of catalyst article and its stability. The amount of La₂O₃, Y₂O₅ and HfOₓ is in the range of about 1 - 10 g/L as stable oxides, preferably 3 - 6 g/L in parts of catalyst article where used. The amount of La₂O₃ in coating is varied in the range of 1- 15 wt-% in a layer present. Lanthanum is used preferably in bottom layers to create NOₓ and SOₓ adsorption capacity and improve the absolute thermal durability next to substrate surface, which enables to keep a good mechanical stability of layers even at high temperatures.

NOₓ storage functions can also be applied in catalyst article, preferably in its bottom (In-B and Out-B) coating layer and more preferably in its Out-B coating layer. When NOₓ adsorption occurs during cold-start with low NOₓ concentrations, mass transfer is not critical. The top layer protects the access of many poisons (solids, larger HCs, SO₂ molecule) into the bottom layer, where NOₓ adsorption materials are located. The top layer prevents with diffusion and heat transfer also too quick desorption of NOₓ from NOₓ adsorbents during fast exhaust gas heat-up periods. NOₓ adsorbents, e.g. cerium oxides, are kept as bulk large particles to achieve a high NOₓ adsorption capacity, whereas PGMs are kept as finely dispersed small particles to achieve high catalytic activity and particularly Pt is known to be chemically very poison durable. Oppositely, a fast access of high HC concentrations into Pt-Pd sites is diffusion limited during DPF regeneration. Therefore, it is important that top layer has higher PGM concentration than bottom layer.

The bottom coating layer of catalyst article can also comprise defined cerium oxide (CeOₓ), lanthanum oxide, yttrium oxide and hafnium oxides, which can be also stabilized mixed oxides. The role of La, Y, Hf and Ce oxides is to increase NOₓ adsorption capacity. The bottom layer can be also free from Al, Ti and Si oxides or even includes only defined Ce, La, Y and/or Hf oxides or their mixtures with optional PGMs. Thus, La, Y, Hf and Ce oxides are NOₓ adsorbents. They are separated from top layer, because they are often disturbing as fresh or after hydrothermal ageing Pt and Pd sites in oxidation reactions and increasing light-off temperatures. NO₂ is formed mainly on the top layer with a higher PGM loading and due to fast pore diffusion NO₂ travels into to bottom layer, where NO₂ is adsorbed on these adsorbents as weakly bound metal-NOₓ compounds or stable metal nitrates. The same metal oxides have also a property to adsorb sulfur oxides (SOₓ), which are therefore trapped in layers, where the PGM loading is low or zero. The adsorption strength of SOₓ is higher on these adsorbents than on e.g. alumina, which enables a selective SOₓ adsorption on Ce, La, Y and Hf oxides, keeping SOₓ on alumina low. Optionally, bottom coating layer has a low PGM loading to improve NOₓ storage activity on the catalyst article. This bottom coating layer can comprise both Pt and Pd with Pt:Pd ratio of about 1:9 to about 9:1. Preferably the bottom layer has a Pt or Pd only composition with a lower PGM loading (< 0.8 g/L, preferably < 0.4 g/L, more preferably < 0.2 g/L) to enhance NOₓ storage functions. Pt in the bottom layer is applied to increase NO oxidation to NO₂ in situ, near to NOₓ adsorbents, in addition to gas phase NO₂ diffusing from the top layer.

The location of NOₓ adsorbing materials can be design more in detail for an optimal utilization. La, Y, Hf oxides as NOₓ and SOₓ adsorbents are located preferably in In-B coating layer, where NOₓ/SOₓ are then adsorbed more strongly than on Ce compounds. Ce oxide as NOₓ adsorbents is located preferably in Out-B coating layer, where the amounts of poisons and inhibiting HCs and CO is lower, temperatures are lower during engine start-up and NO₂ concentrations higher due to Pt-rich top layer. When the Pt-rich layer is better than low Pt/Pd catalysts in HC-SCR reactions, formed and desorbed NO₂ can be utilized better in that outlet coating layers. Of course, HC-SCR is proceeding also in inlet layers when HC concentration is higher. When the NOₓ adsorbent with higher desorption temperature (La/Y/Hf) are located first in flow direction, then desorbed NOₓ is able to pass outlet zone when not adsorbed on Ce compounds. If Ce is located only in In-B layer and La/Hf/Y in Out-B layer, desorbed NOₓ will be adsorbed in downstream on La/Y/Hf sites. Therefore, La, Y and Hf are located in an optimal structure in In-B layer and Ce or stabilized Ce in Out-B layer. If focused mainly on low temperature adsorption-desorption, both In-B and Out-B coating layers include Ce.

Adsorbed NOₓ and SOₓ on adsorbents (e.g. Ce, La, Y and Hf oxides, zeolites) can be desorbed during passive (normal drive) or active regeneration. These compounds and PGM-zeolites have a property of NOₓ adsorption, which is based on NOₓ adsorption at low temperatures (< 200°C) and desorption in lean exhaust gas conditions above 160 - 200°C. Therefore, NOₓ is adsorbed at low temperatures where urea- selective catalytic reduction (SCR) catalyst downstream as a deNOₓ method is not yet activated and desorbed at temperatures, where urea injection is started for SCR. The adsorption-desorption property on catalyst article is applied to reach the challenging total NOₓ performance targets in the latest lean applications (e.g., diesel and H₂ engines). When the adsorption-desorption property is differentiated from PGM-rich layers and into bottom layer, it is not disturbing PGM interactions with their optimal supports. The mass transfer to PGM sites on top layers is required to be fast e.g., DPF regeneration conditions (high HC) but the adsorbed compounds will have more time to diffuse into bottom layers in use conditions. When NOₓ trap agents are also trapping SOₓ in the invented catalyst article, SOₓ are kept far from main PGMs. To apply NOₓ adsorption and nitrate/NOₓ regeneration (decomposition) most efficiently, periodic enrichments (λ < 1.2, preferably < 1.0) can be also applied for catalyst article with NOₓ/SOₓ adsorbents. In these conditions, NOₓ is desorbed easily above 150°C and reduced on PGM sites. Ce, La, Y and Hf oxides are the preferably compounds for the application having enrichments with λ < 1.2. NOₓ and SOₓ recovery in use and regeneration conditions is easier with these compounds in comparison to conventional NOₓ trap elements such as barium (Ba) and potassium (K), which required higher temperatures particularly for SOₓ decomposition. However, it possible that these types of NOₓ adsorbents, e.g., earth alkali metals, such as strontium (Sr) and Ba, are present in catalyst article to increase the adsorption capacity, if the enrichment strategy is very efficient (λ < 1.0) in the system. In diesel and dual-fuel applications, it is required also periodic DPF regeneration, which will be a natural way to decompose at least partly adsorbed more strongly bound NOₓ and SOₓ on catalyst article layers.

The NOₓ adsorption capacity of Ce compounds can be controlled by e.g. the CeOₓ particle size and surface area (m²/g). When Ce is added as Ce oxide particles in a layer, the original properties of powder form material is selected to reach the best functionality. The use of very high surface area material and small particle size provides the highest the NOₓ adsorption capacity. It is difficult to keep extreme initial surface area if temperatures are too high in an application. However, it was reached the highest NOₓ adsorption capacity with Ce oxide (Ce2) having specific surface area by Brunauer-Emmett-Teller (BET) method about 270 m²/g and particle size of 5 µm (d₅₀). This type of Ce oxides (Ce2) had still clearly higher adsorption capacity after hydrothermal (HT) ageing at 700°C for 20h than the other Ce oxide (Ce1), which had the specific surface area (BET) as low as 140 m²/g as fresh state and particle size 11 µm (d₅₀). The best adsorption capacity and release can be connected to specific surface area (BET) of > 200 m²/g, preferably > 240 m²/g as fresh state. This Ce compounds can be defined by the original particle of < 10 µm ((d₅₀), preferably < 7 µm). In addition to high-surface area CeO₂, soluble Ce compounds can be used in the same layer, to create small CeOₓ particles and act also as a binder. The role of binders is to bound larger solid particles together and create a mechanically durable, porous layer with a good adhesion on the substrate surface. Zr stabilized Ce (ZrCe) oxide is capable to also have a high adsorption capacity and specific surface area (BET) (ZrCe with 182 m²/g and 12 µm). Zr stabilization also prevents sulfur poisoning and improve thermal durability. In addition, manganese (Mn), titanium (Ti), and Praseodymium (Pr) promoted cerium oxides can also be used as a NOₓ adsorption material.

Zeolites such as Beta, ZSM-5, chabazite (CHA), AEI, ferrierite (Fer), Y or their combinations with a high Si/Al₂ ratio (SAR, 5 - 1000, preferably 10 - 50) can be added preferably in the bottom layers to increase hydrocarbon and/or NOₓ adsorption capacity at low temperatures. High SAR zeolites are good hydrocarbon traps without additional metals. However, the adsorption of NOₓ and hydrocarbon can be promoted chemically by impregnating Pd or Pt on these zeolites, drying and calcining before adding into the washcoat slurries. PGM comprising or PGM-free zeolites for hydrocarbon trapping are present preferably in In-B coating layer. PGMs can be added also into a ready zeolite comprising washcoat slurry. Pd on zeolites (e.g., CHA, Beta and Fer) has a property of NOₓ adsorption. Pd comprising zeolite for NOₓ adsorption is present preferably in In-B layer. The presence of Pt and/or Pd on these zeolites (e.g., Beta, ZSM-5) promotes and activate hydrocarbons to be adsorbed on zeolites. The concentration of PGMs is in the range of 0.1 - 3.0 wt-% of dry zeolite weight. Preferably, Pd is added on CHA or Fer and Pt on Beta or ZSM-5.

PGM components can be added in form of nitrates, ammonium/ammine compounds, chlorides, carbonates, sulfates, or their combinations in the washcoat slurry. The total amount of PGM components in coating layer is the range of about 0.1 - 10 wt-%, preferably 0.5 - 3 wt-% of the total amount of coating. Organic and inorganic acids as well ammonia, ammonium hydroxide and other inorganic hydroxides can be used to adjust pH of washcoat solution to improve activity, coatability and the adhesion of washcoat. Optionally, PGM components can be added beforehand directly on raw material particles to ensure their high concentration and location in any layer.

Support and promoter components such as aluminum, silicon, titanium, tungsten cerium, zirconium, lanthanum, hafnium, and yttrium as well as zeolites can be added as ready powders, oxides, or their precursors (nitrates, carbonates, hydroxides, ammonium compounds) individually into washcoat or by impregnating from a precursor solution directly to catalyst article layers. Support and promoter material components can be also added as their mixed oxides, such as Si-AI, Ti-AI, Zr-AI, La-AI, Si-Zr, Si-Zr-Al, Ce-Zr and Ce-Zr-Al oxides, into washcoat or directly to catalyst article layers. The total amount of these materials in catalyst article is in the range of about 50 - 200 g/L, and more preferably 100 - 150 g/L.

The described invention has high activity in hydrocarbon and CO oxidation in front part of catalyst article, enabling high hydrocarbon oxidation especially in DPF regeneration conditions (High hydrocarbon concentration, such as > 1% C₁), where oxidation is inhibited on conventional DOC or single PGM catalysts by high hydrocarbon. Higher Pd amount is necessary to overcome that inhibition and improve thermal durability when temperature increase is high during fast oxidation with high hydrocarbon concentration using an excess of oxygen. Pt is promoting the oxidation of certain hydrocarbons, increases chemical durability e.g., against sulfur and forms a promoting interaction with Pd. The invention has also shown a high activity in NO oxidation to NO₂ in the rear part of catalyst article.

The main part of oxidation reactions takes place in top coating layer of catalyst article, preferably in In-T coating layer, where PGMs are mostly loaded there. Therefore, the internal mass transfer (pore diffusion) limitations are low, even if pores in the top layer can be partly filled by deposits in long-term use. Under DPF regeneration conditions, In-T coating layer is more active in hydrocarbon oxidation than Out-T coating layer. Longer (> 50% of total length of substrate, preferably 55 - 70%) In-T coating layer with defined PGM loading and Pt:Pd ratio is necessary to overcome external and internal mass transfer limitations in the presence of high hydrocarbon concentrations. Longer In-T coating layer gives more residence time for catalysis and heat transfer in exothermic reactions (HC/CO oxidation). If the total coating amount is increased by thicker bottom layers, the backpressure increases, and radial flow distribution is improved resulting in higher hydrocarbon oxidation activity in DPF regeneration.

Thick bottom layers with low/zero PGM loadings and adsorbents creates higher adsorption capacities, which can be utilized for hydrocarbon and NOₓ trapping and removal. PGM loading is preferably also low, when PGM atoms partly blocks the NOₓ adsorption sites on NOₓ adsorbents. Even if the length of Out-T coating layer is shorter (< 50%, preferably 30 - 45% of total length of substrate), that shorter length is long enough to reactions proceeding in the rear part of catalyst article. When hydrocarbon and CO are mainly oxidized in In-T coating layer, the Out-T coating layer is mainly planned and optimized for NO oxidation. The concentrations of exhaust gas components (NO, hydrocarbon, CO) are much lower in rear part (Out-T coating layer), a shorter length and coating amount is enough to reach target conversions in normal exhaust and DPF regeneration conditions.

In special cases, the layer with NOₓ adsorbent can be located as a top layer, when the main function of catalyst article is NOₓ adsorption, a fast adsorption-desorption is required and the amounts of poisons in exhaust gas is negligible. However, the same compositions in layers by the invention can be applied (e.g. Figs 3 and 4). If having high PGM amounts in bottom layers, the PGM losses by erosion is very low, which protects e.g. SCR catalyst about PGM poisoning, particularly, when the ATS has no DPF (H₂ engine applications).

The catalyst article can be coated on a ceramic and metallic substrate. The substrate is preferably a flow-through type substrate, but wall-flow filter structures can be applied in catalyst article design with layers. In accordance with the invention monolithic catalyst substrates made from ceramics or metal are preferred. As is known in the art, ceramic substrates (honeycombs) usually have square cells, while most metallic substrates have sinusoidal channels. Other channel cross sections are nevertheless possible with the invention, including triangular, hexagonal, trapezoidal, or round.

A substrate suitable for use with the invention has a cell density of 10 - 2000 cells per square inch (cpsi), but range preferably, as is customary in lean and diesel applications, from 100 to 600 cpsi. When the substrate is a ceramic substrate a wall thickness of from 10 to 500 µm is preferable, more preferably from between 50 to 200 µm for in lean and diesel application. When the substrate is a metallic substrate, a wall thickness of the substrate is from 20 to 200 µm, preferably from 30 to 100 µm, or more preferably from 40 to 60 µm.

The catalyst article is coated by spraying, dosing, or dipping of washcoat on substrate and any mixtures thereof to reach the correct amount and penetration depth and layer thickness of washcoat inside catalyst article. Surface and slurry properties are modified with typical organic agents to enable the efficient coating process. Active materials, such as Pt group metals, can be added on washcoat slurry or they are post-impregnated or chemisorbed from a precursor solution with organic or inorganic (typically water) solvent to the catalyst article substrate after porous support material has been added. PGMs can be added on raw materials before added into washcoat. In the front part of catalyst article, the In-B coating layer is coated first on the surface of uncoated part of catalyst article (substrate) and the In-T coating layer is coated on the top of bottom coating layers. In the rear part of catalyst article, the Out-B coating layer is coated first on the surface of uncoated part of catalyst article (substrate) and the Out-T coating layer is coated on the top of outlet coating layers. The schematic illustration, how these coating layers are located, is shown in Figures. 1, 2 and 5, and in those figures, s1, s2, s3, s4, s5 and s6 represents the (radial) coating thickness of In-B, Out-B, In-T, Out-T, Mid-B and Mid-T coating layers, respectively. Because the (axial) lengths, L1, L2, L3, L4, L5, L6 of each coating layer can vary in the range of 0 - L (L1 + L2 + L5 ≤ L; L3 + L4 + L6 ≤ L) as shown in Figure 2, the top layers are not ideally on the top of the layers in the same location (inlet, middle, outlet) in flow direction. If catalyst article has no middle coating layers, the lengths (L1 and L2) of In-B and Out-B coating layers is in the range of about 20-80%, more preferably about 50%, of total length of catalyst article. Then, the lengths (L3 and L4) of In-T and Out-T coating layer is in the range of about 20 - 80%, preferably 30 - 70%, more preferably 30 - 70% and L3 > L4, of total length of catalyst article. If Mid-B coating layers is created in catalyst article, the lengths of In-B, Mid-B and Out-B coating layer are in the range of about 5 - 70%, more preferably about 33% of total length of catalyst article. Also, if Mid-T coating layer is created, the lengths of In-T, Mid-T and Out-T coating layer are in the range of about 5 - 70%, more preferably 20 - 50% of total length of catalyst article. The coating thickness of each one of these layers can be 1-100 µm and preferably in lean and diesel application 5 - 50 µm. The amount of coating of each coating layer can be about 10 - 200 g/L (grams of coating per substrate volume as liters), preferably about 40 - 100 g/L and more preferably about 50 - 80 g/L in all layers of catalyst article. Alternatively, the catalyst article composition is created by any deposition methods (e.g. ALE, sol-gel) and including possibly organic vapor precursors for defined elements.

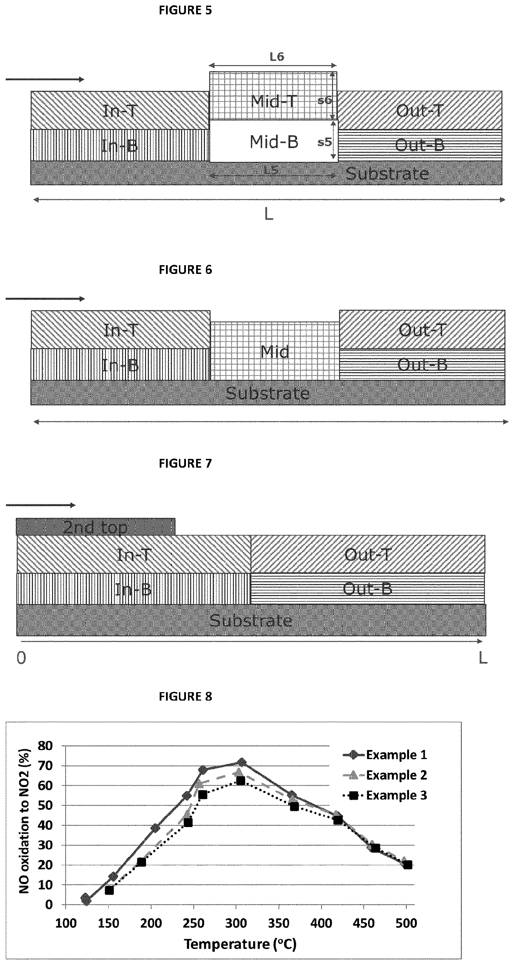

The In-B, Out-B, In-T and Out-T coating layers can also overlap each other, creating a layer where these layers are mixed. This is a way to form an additional middle coating layers (Mid-B and Mid-T) in catalyst article (Figures 5 and 6). The middle layer can comprise also bottom (Mid-B) and top (Mid-T) layer as in Figure 5, or only Mid layer as in Figure 6. The middle layer can have also prepared in other ways, by adding several washcoat doses in a direction catalyst article and thus forming a different composition in middle layers in comparison to inlet and outlet layers. The total coating thickness/amount in middle layer is lower or higher than in inlet and outlet layers. The higher coating amount is created if an overlap is utilized in the preparation. The lower coating amount is created if no overlap is formed but oppositely the bottom or top layer is not coated until the coating depth from another direction. In the same way, the PGM loading and Pt:Pd ratio differs from the outlet and inlet layers. The total PGM loading in middle layer can be higher or lower than in comparison to inlet and outlet layers, totally or as single bottom and top layers. The benefit to have higher coating amount is to have after light-off (reaction initiation) region a high amount of coating to balance a high heat formation. A higher coating amount creates also pressure drop in channels which enforces gas to flow radially evenly through channels. When that high coating amount/thickness is only in a short distance, the total pressure drop increase is still low. The possible higher PGM loading in middle layers has a benefit to reach faster the complete oxidation of hydrocarbons and CO. In addition, when inlet and outlet PGM loading and Pt:Pd ratio are very different as tailored to different reactions, it is possible to have an intermediate composition in middle, where the properties are shifting stepwise from inlet to outlet compositions. Depending on the application, it is possible weight more the properties of inlet (high hydrocarbon oxidation activity) or outlet (high NO₂ formation activity) layers. The variation of the length of inlet, middle and outlet layers is a tool to optimize the catalyst article performance for an application.

In an embodiment, the catalyst article of the invention can also comprise a 2^{nd} top layer, which is located at top of other coating layers from front or rear part of catalyst article and comprises PGM components, preferably Pt and Pd. The length of the 2^{nd} top layer is in the range of 10 - 100%, preferably 20 - 40%, of total length of catalyst article.

NOₓ adsorbing materials (Ce, La, Y, Hf and Ce mixed oxides or mixture of these oxides, zeolite materials) in the catalyst article is applied in the cold driving phases during the engine start-up or low speed/load driving conditions. NOₓ is adsorbed below 100 - 200°C in cold phases in the catalyst article located before a deNOₓ unit (e.g. SCR, LNT) and then later desorbed due to the increasing temperature in normal driving conditions ideally around at 150 - 250°C. Desorption temperature is low enough to release NOₓ adsorption capacity for next adsorption phase but high enough that e.g. a SCR catalyst and urea dosing downstream is already operating. It is important that the NOₓ adsorbents are able to adsorb and desorb NOₓ in transient driving when temperature in cruising up and down at 100 - 250°C. NOₓ adsorption compounds (e.g. Ce compounds with a high surface area, zeolites) are selected in a way to have these low temperature adsorption-desorption properties. Ce mixed oxides with Zr, Ti, Mn and/or Pr give a potential to increase NOₓ adsorption capacity or stability (thermal, sulfur tolerance). Conventional NOₓ adsorbents (e.g. Ba) bind NOₓ too strongly and the desorption in driving conditions will start at too high temperatures. Even if SOₓ can be adsorbed on these low temperature adsorbents (e.g. Ce compounds), the formed sulfates or adsorbed SOₓ have also easier to be decomposed in comparison to e.g. Ba sulfates. Zeolite based NOₓ adsorbents are durable for SOₓ, when aluminum silicates (zeolites) do not adsorb SOₓ. Pt is known to durable in the presence of SOₓ. When Pd is used with e.g. NOₓ adsorption materials, Pd sulfates are decomposed in typical lean conditions. In addition, possible sulfates on these NOₓ adsorbents are decomposed also during DPF or typical SCR catalyst regeneration (for sulfur removal) conditions (e.g. at about 600°C). Sulfates on conventional NOₓ adsorbents are not decomposed yet in lean conditions at 600°C. La, Y and Hf are extending the NOₓ adsorption window to medium temperature ranges (above 200°C) to be combined with the low temperature NOₓ adsorbents (Ce compounds, zeolites).

In an embodiment, the catalyst article of the invention can be applied as a single or multiple units in ATS to purify lean exhaust gases originating from combustion of diesel, gasoline, natural gas, biofuels, synthetic HC mixtures, hydrogen, ammonia or their combinations (multi-fuel applications) or as a part of hybrid (electric and combustion engines) applications. Also, ATS can comprise DPF, oxidation catalyst, hydrolysis, SCR and ammonia slip catalyst (ASC) units and the catalyst article unit is usually located before those other exhaust treatment units by the flow direction. It is also possible that other ATS units, like NOₓ adsorption or special oxidation catalysts (e.g. for methane oxidation), are located before this catalyst article.

### EXAMPLES

### Sample preparation - Methods

The catalyst article inventions and reference samples were prepared by adding one or several washcoat slurries in specific sequence on ceramic flow-through substrates with cell density of 400 cpsi and wall thickness of 100 µm or metallic substrate with cell density of 300 cpsi after rolling and wall thickness of 50 µm. Washcoat slurries comprises platinum group metal (PGM) components (Pt and Pd), alumina, and other raw materials which are specified in examples in more detail. First Al-compound and other possible metal oxide precursors were diluted in deionized water. Slurry was milled in a ball mill or continuous mill for some hours until washcoat slurry has reached target particle size. PGM components and other possible raw materials have been added together with pre-milled slurry, where water was the main liquid.

Ready washcoat slurry have been applied on ceramic substrates by dipping, dosing, sucking, or blowing the washcoat to have target amount of washcoat on catalyst article inventions and reference samples. Optionally, ready washcoat slurry were brushed on metallic foil. The washcoat amount was adjusted based on the amount of wet slurry and measured solid content in wet slurry. Coated catalyst article inventions and reference samples were dried in an air flow at 60 - 120°C after each coating step to remove excess of water. The catalyst article of the invention and reference samples were calcined in static-air oven at 550°C for 1h in between coating layer additions and at 550°C for 4 hours after the addition of all coating layers. Final calcination temperature, calcination time and heating ramps can be selected based on the used precursors and target properties of washcoat slurry to enable good adhesion and high activity of catalyst article. For example, final calcination temperature can be in the range about 500°C and about 700°C. The coating amount (g/L, grams of coating per substrate volume as liters), was calculated based on final weight of catalyst article and reference samples after calcination. More precisely, differences between each catalyst article and reference samples are described in Table 1 and in examples 1-12.

**Table 1. Composition, platinum group metal (PGM) loading and Pt:Pd ratio in different coating layers and their averages as well as additional components (elements) used despite of alumina and PGM components.**

| **Example** | **PGM loading (g/L) in In-T/ln-B//OutT/Out-B layer** | **Pt:Pd ratio in InT/In-B//Out-T/In-B layer or a single layer** | **Average PGM loading (g/L) and Pt:Pd ratio** | **Code (elements) In-T/In-B//Out-T/Out-B layer or top/bottom layer** |
|---|---|---|---|---|
| **1** | 0.88 / 0 // 0.88 / 0 | 1:0 / - // 1:0 / - | 0.88 Pt only | Pt-Al-W / Al (full-size) |
| **2** | 0.88 (Single layer with W) | 1:0 | 0.88 Pt only | Pt-Al-W (full-size) |
| **3** | 0.88 (Single layer, Reference) | 1:0 | 0.88 Pt only | Pt-AI (full-size) |
| **4** | 0.88 / 0 // 0.88 / 0 | 4:1 / - // 1:0 / - | 0.88 PGM, Pt:Pd = 9:1 | Pt-Pd-Al / Al // Pt-Al-W / Al |
| **5** | 0.88 / 0 // 0.88 / 0 | 1:0 / - // 1:0 / - | 0.88 Pt only | Pt-Al-W / Al |
| **6** | 0.88 / 0 // 0.88 / 0 | 4:1/-//4:1/- | 0.88 PGM, Pt:Pd = 4:1 | Pt-Pd-Al / Al |
| **7** | 0.88 / 0 // 0.88 / 0 | 4:1 / - // 1:0 / - | 0.88 PGM, Pt:Pd = 9:1 | Pt-Pd-Al / Al // Pt-Al-W / Al |
| **8** | 0.88 / 0 // 0.88 / 0 | 4:1 / - // 9:1 / - | 0.88 PGM, Pt:Pd = 5.7:1 | Pt-Pd-Al / Al // Pt-Pd-Al / Al |
| **9** | 0.88 / 0 // 0.88 / 0 | 2:1 / - // 1:0 / - | 0.88 PGM, Pt:Pd = 5:1 | Pt-Pd-Al / Al // Pt-Al-W / Al |
| **10** | 0.88 / 0 // 0.88 / 0 | 2:1/-//1:0/- | 0.88 PGM, Pt:Pd = 5:1 | Pt-Pd-Al / Al // Pt-AI / Al |
| **11a** | 0.88 / 0.17 // 0.88 / 0.17 | 1:0/1:0//1:0/1:0 | 1.06 Pt only | Pt-Al-W / Pt-Ce1 |
| **11b** | 0.88 / 0.17 // 0.88 / 0.17 | 4:1/1:0//4:1/1:0 | 1.06 Pt:Pd = 5:1 | Pt-Pd-Al / Pt-Ce1 |
| **11c** | 0.88 / 0 // 0.88 / 0 | 1:0 / - // 1:0 / - | 0.88 Pt only | Pt-Al-W / Ce1 |
| **11d** | 0.88 / 0.17 // 0.88 / 0.17 | 1:0/1:0//1:0/1:0 | 1.06 Pt only | Pt-Al-W / Pt-ZrCe-La |
| **11e** | 0.88 / 0.17 // 0.88 / 0.17 | 1:0/1:0//1:0/1:0 | 1.06 Pt only | Pt-Al-W / Pt-ZrCe |
| **11f** | 0.88 / 0.17 // 0.88 / 0.17 | 4:1 / 0:1 // 4:1 / 0:1 | 1.06 PGM, Pt:Pd = 2:1 | Pt-Pd-Al / Pd-Fer |
| **11g** | 0.88 / 0.17 // 0.88 / 0.17 | 1:0 / 1:0 // 1:0 / 1:0 | 1.06 Pt only | Pt-Al-W / Pt-Al |
| **11h** | 0.88 / 0.17 // 0.88 / 0.17 | 4:1 / 1:0 // 4:1 / 1:0 | 1.06 PGM, Pt:Pd = 5:1 | Pt-Pd-Al / Pt-Ce2 |
| **11i** | 0.88 / 0.17 // 0.88 / 0.17 | 1:0 / 1:0 // 1:0 / 1:0 | 1.06 PGM, Pt only | Pt-Al-W / Pt-Ce2 |
| **11j** | 0.88 / 0 // 0.88 / 0 | 1:0 / - // 1:0 / - | 0.88 PGM, Pt only | Pt-Al-W / Al |
| **11k** | 0.88 / 0 // 0.88 / 0 | 4:1 / - // 4:1 / - | 0.88 PGM, Pt:Pd=4:1 | Pt-Pd-Al / Al |
| **12a** | 0.88 / 0.17 // 0.88 /0.17 | 4:1 / 1:0 // 1:0 / 1:0 | 1.06 g/L PGM, Pt:Pd = 11:1 | Pt-Pd-Al / Pt-Ce2 // Pt-Al-W / Pt-Ce2 |
| **12b** | 0.88 / 0.17 // 0.88 / 0 | 4:1 / 1:0 // 1:0 / - | 0.97 g/L PGM, Pt:Pd = 10:1 | Pt-Pd-Al / Pt-Ce2 // Pt-Al-W / Al |
| **12c** | 0.88 / 0.17 // 0.88 / 0.17 | 4:1 / 0:1 // 1:0 / 1:0 | 1.06 g/L PGM, Pt:Pd = 5:1 | Pt-Pd-Al / Pd-Fer // Pt-Al-W / Pt-Ce2 |
| **12d** | 0.88 / 0 // 0.88 / 0 | 4:1 / - // 1:0 / - | 0.88 g/L PGM, Pt:Pd=9:1 | Pt-Pd-Al / Al // Pt-Al-W / Al |

Composition of examined samples in experiments and table 1 were described according to the general structure by Fig. 1, except of single layer compositions. Therefore, the samples having the same top or bottom layer composition means that In-T and Out-T had the same composition or In-B and Out-B had the same composition in experiments. Many samples in table 1 were made to optimize separately the inlet or outlet layer compositions for HC/CO oxidation, NO oxidation to NO₂ or NOₓ adsorption-desorption properties, which were optimally differentiated in the catalyst article composition. This is a way to see better the effect of single variables. Finally, samples with four different layer compositions (In-T, In-B, Out-T and Out-B coating layers) were examined by Example 12 samples, to see the overall functionality of the catalyst article.

### Example 1

An example which has different porous coating located in bottom and top layer on ceramic substrate (2.5L for full-size testing) as shown in Figure 4. Bottom coating layer comprised 100 wt-% alumina and no PGM components. In coating preparation for top layer of catalyst article, tungsten and platinum precursor materials were added to pre-milled alumina comprising slurry. After coating, drying and calcination, the coating layer comprised 87.9 wt-% alumina, 10.6% tungsten oxide (WO₃) and 1.52 wt-% platinum. Total PGM loading in this example was 0.88 g/L Pt and example was free of Pd. The coating compositions were the same in inlet bottom (In-B) and outlet bottom (Out-B) layers. Inlet top (In-T) and outlet top (Out-T) coating layers had the same composition too. This example was made to show the W promotion for NO₂ formation to be applied in Out-T coating layer in the catalyst article.

### Example 2

A single coating layer with tungsten was applied for this example (substrate, 2.5L for full-size testing), where tungsten and platinum precursor materials were added to pre-milled alumina comprising slurry. After coating, drying and calcination, the coating layer comprised 93.9 wt-% alumina, 5.3% tungsten oxide and 0.76 wt-% platinum. PGM loading in this example was 0.88 g/L Pt and example was free of Pd. That composition can be applied as an example layer with W promotion in the catalyst article.

### Example 3 - Reference

A reference oxidation catalyst had a single coating layer on a ceramic substrate (2.5L for full-size testing). Coating layer comprised 99.2 wt-% alumina and 0.76 wt-% platinum. The PGM loading in this example was 0.88 g/L Pt (no Pd).

### Example 4

This example had different porous coating located in the bottom and top coating layers on a ceramic substrate (for SGB testing) as shown in Figure 3. Bottom coating layer comprised 100 wt-% alumina and no PGM components. The coating compositions were the same in inlet bottom (In-B) and outlet bottom (Out-B) coating layers. The Inlet top (In-T) coating layer was in front part of catalyst article by flow direction and comprised 99.2 wt-% alumina, 0.61 wt-% platinum and 0.15 wt-% palladium. In the Outlet top (Out-T) washcoat, tungsten and platinum precursor materials are added to pre-milled alumina comprising slurry. After coating, drying and calcination, Out-T coating layer comprised 93.9 wt-% alumina, 5.3% tungsten oxide and 0.76 wt-% platinum. PGM loading in front (inlet) part was 0.88 g/L PGM and Pt:Pd ratio was 4:1. PGM loading in the rear (outlet) part was 0.88 g/L Pt (no Pd). Average PGM loading in this example was 0.88 g/L PGM and Pt:Pd ratio was 9:1. Inlet top (In-T) and outlet top (Out-T) coating layers had the different compositions and Pt:Pd ratio. This catalyst article example was made to show the PtPd promotion both in In-T coating layer for HC/CO oxidation and W promotion with Pt for NO₂ formation in Out-T coating layer.

### Example 5

This example had different porous coating located in bottom and top layer on ceramic substrate (for SGB testing) as shown in Figure 4. Bottom coating layer comprised 100 wt% alumina and no PGM components. The coating compositions were the same in inlet bottom (In-B) and outlet bottom (Out-B) coating layers. In preparation of top coating layer, tungsten and platinum precursor materials are added to pre-milled alumina comprising slurry. After coating, drying and calcination, the coating layer comprised 93.9 wt-% alumina, 5.3% tungsten oxide and 0.76 wt-% platinum. PGM loading in this example was 0.88 g/L Pt and it was free of Pd. Inlet top (In-T) and outlet top (Out-T) coating layers had the same composition too. This example was made to show the W promotion for NO₂ formation to be applied in Out-T coating layer in the catalyst article.

### Example 6

This example had different porous coating located in bottom and top layer on ceramic substrate (for SGB testing) as shown in Figure 4. Bottom coating layer comprised 100 wt% alumina and no PGM components. The coating compositions were the same in inlet bottom (In-B) and outlet bottom (Out-B) coating layers. Top coating layer 99.2 wt-% alumina, 0.61 wt-% platinum and 0.15 wt-% palladium. PGM loading in this example was 0.88 g/L PGM and Pt:Pd ratio was 4:1. This catalyst example was made to show the PtPd promotion in In-T coating layer for HC/CO oxidation in the catalyst article.

### Example 7

An catalyst article which has different porous coatings located in the bottom, In-T and Out-T coating layers on a ceramic substrate (for SGB testing) as shown in Figure 3. Bottom coating layer comprised 100 wt-% alumina and no PGM components. The coating compositions were the same in inlet bottom (In-B) and outlet bottom (Out-B) coating layers. The Inlet top (In-T) coating layer was in the front part of catalyst article by flow direction and comprised 99.2 wt-% alumina, 0.61 wt-% platinum and 0.15 wt-% palladium. In the Outlet top (Out-T) coating, tungsten and platinum precursor materials are added to pre-milled alumina comprising slurry. After coating, drying and calcination, Out-T coating layer comprised 93.9 wt-% alumina, 5.3% tungsten oxide and 0.76 wt-% platinum. PGM loading in front part was 0.88 g/L PGM and Pt:Pd ratio was 4:1. PGM loading in rear part was 0.88 g/L Pt and this part was free of Pd. Average PGM loading in this example was 0.88 g/L PGM and Pt:Pd ratio was 9:1. Therefore, Inlet top (In-T) and outlet top (Out-T) coating layers had the different compositions and Pt:Pd ratio. This catalyst article example was made to show the PtPd promotion both in In-T layer for HC/CO oxidation and W promotion with Pt for NO₂ formation in Out-T coating layer.

### Example 8

This example had different porous coatings located in the bottom, In-T and Out-T coating layers on a ceramic substrate (for SGB testing) as shown in Figure 3. Bottom coating layer comprised 100 wt-% alumina and no PGM components. The coating compositions were the same in inlet bottom (In-B) and outlet bottom (Out-B) coating layers. Inlet top (In-T) coating layer was in the front part of catalyst article by flow direction and comprised 99.2 wt-% alumina, 0.61 wt-% platinum and 0.15 wt-% palladium. Outlet top (Out-T) coating layer was in rear part of catalyst article by flow direction and comprised 99.5 wt-% alumina, 0.68 wt-% platinum and 0.08 wt-% palladium. PGM loading in front part was 0.88 g/L PGM and Pt:Pd ratio was 4:1. PGM loading in rear part was 0.88 g/L PGM and Pt:Pd ratio was 9:1. Average PGM loading in this example was 0.88 g/L PGM and Pt:Pd ratio was 5.7:1. Therefore, Inlet top (In-T) and outlet top (Out-T) coating layers had the different compositions and Pt:Pd ratio. This example was made to show the effect of Pt:Pd ratio in In-T and Out-T coating layers in the absence of W on HC/CO/NO oxidation.

### Example 9

This catalyst article had different porous coating located in the bottom, In-T and Out-T coating layers on a ceramic substrate (for SGB testing) as shown in Figure 3. Bottom coating layer comprised 100 wt-% alumina and no PGM components. The coating compositions were the same in inlet bottom (In-B) and outlet bottom (Out-B) coating layers. The Inlet top (In-T) coating layer was in front part of catalyst article by flow direction and comprised 99.2 wt-% alumina, 0.51 wt-% platinum and 0.25 wt-% palladium. In the Outlet top (Out-T) washcoat, tungsten and platinum precursor materials are added to pre-milled alumina comprising slurry. After coating, drying and calcination, Out-T coating layer comprised 93.9 wt-% alumina, 5.3% tungsten oxide and 0.76 wt-% platinum. PGM loading in front part was 0.88 g/L PGM and Pt:Pd ratio was 2:1. PGM loading in rear part was 0.88 g/L Pt (no Pd). Average PGM loading in this example was 0.88 g/L PGM and Pt:Pd ratio was 5:1. Therefore, Inlet top (In-T) and outlet top (Out-T) coating layers had the different compositions and Pt:Pd ratio. This catalyst article example was made to show the PtPd promotion both in In-T coating layer for HC/CO oxidation and W promotion with Pt for NO₂ formation in Out-T coating layer.

### Example 10

This example had different porous coatings located in the bottom, In-T and Out-T coating layers on a ceramic substrate (for SGB testing) as shown in Figure 3. Bottom coating layer comprised 100 wt-% alumina and no PGM components. The coating compositions were the same in inlet bottom (In-B) and outlet bottom (Out-B) coating layers. The Inlet top (In-T) coating layer was in front part comprised 99.2 wt-% alumina, 0.51 wt-% platinum and 0.25 wt-% palladium. Out-T coating layer comprised 99.2 wt-% alumina, and 0.76 wt% platinum. PGM loading in front part was 0.88 g/L PGM and Pt:Pd ratio was 2:1. PGM loading in rear part was 0.88 g/L Pt (no Pd). Average PGM loading in this example was 0.88 g/L PGM and Pt:Pd ratio was 5:1. Therefore, Inlet top (In-T) and outlet top (Out-T) coating layers had the different compositions and Pt:Pd ratio. This example was made to show the effect of Pt:Pd ratio in In-T and Out-T coating layers in the absence of W on HC/CO/NO oxidation.

### Example 11a-k

These examples had different porous washcoat located in the bottom and top coating layers on a ceramic substrate (for SGB testing) as shown in Figure 4. Bottom coating layer comprised Pt-Ce1 (Example 11a-b), Ce1 (11c), Pt-ZrCe-La (11d), Pt-ZrCe (11e), Pd-Fer (11f) and Pt-alumina (coded Pt/AI, (11g), Pt-Ce2 (11h-i) and alumina (11j-k). Ce1 and Ce2 are added as ready powders: Ce1 with 149 m²/g and d₅₀ of 11 µm; Ce2 with 270 m²/g and d₅₀ of 5 µm; ZrCe with 182 m²/g and d₅₀ of 12 µm. Ce nitrate was used as a binder and additional NOₓ adsorbent source with other Ce materials. However, it was seen that also Al sol or other binders can applied as binders. Therefore, Ce1 and Ce2 bottom layers comprised only Ce and ZrCe layer comprised of Ce and Zr. Ce, La, ZrCe are present in the coating layer as their stable oxides or their mixtures (e.g. CeO₂, La₂O₃, ZrO₂, generally CeOₓ, LaOₓ, ZrOₓ) in the use conditions. La was added as La nitrate solution and Zr as Zr nitrate solution, resulting in a good dispersion of Zr and La on other porous materials. Therefore, the 11d sample composed of Zr, Ce and La in the final layer. The exact oxidation state of metal oxides is depending of temperature and gas composition in preparation and use. These compounds can also form aluminates in the presence Al oxides. The coating compositions were the same in inlet bottom (In-B) and outlet bottom (Out-B) coating layers in each single example. Examples 11a,b,d,e,g,h,i comprised 0.15 wt-% platinum, Example 11f comprised 0.15 wt-% palladium and Example 11c,j,k had no PGMs in inlet and outlet bottom layers. Inlet top (In-T) and outlet top (Out-T) coating layers had the same composition in each single example. Examples 11a,c,d,e,g,i,j comprised 0.76 wt-% platinum with 5.3 wt-% tungsten oxide and Examples 11b,f,h,k comprised 0.61 wt-% platinum with 0.15 wt-% palladium. Total PGM loading with examples 11a,b,d,e,f,g,h,i was 1.06 g/L PGM and with example 11c,j,k was 0.88 g/L PGM.

### Example 12a-d

These catalyst articles had 3-4 different coating compositions located in the In-T, In-B, Out-T and Out-B coating layers on a ceramic substrate (for SGB testing) as shown in Figure 1. These inlet and outlet layers were prepared by the materials and methods as described in Example 11. In-B coating layer comprised Pt-Ce2 (12a-b), Pd-Fer (12c) and alumina (12d), and the coating layer comprised 0.15 wt-% platinum (Examples 12a,b) or 0.15 wt-% palladium (Example 12c) or no PGMs (Example 12d). Out-B layer comprised Pt-Ce2 (12a,c), alumina (12b,d), and coating layer comprised 0.15 wt-% platinum (Examples 12a,c) or no PGMs (Example 12b,d).

In-T coating layer comprised 0.61 wt-% platinum and 0.15 wt-% palladium (Examples 12a-d). Out-T coating layer comprised 0.76 wt-% platinum and 5.3 wt-% tungsten oxide (Examples 12a-d). Total PGM loading was 1.06 g/L PGM with examples 12a,c and 0.97 g/L PGM with example 12b and 0.88 g/L PGM with example 12d. Inlet top (In-T) and outlet top (Out-T) coating layers in each single example had the different compositions and Pt:Pd ratio. Inlet bottom (In-B) and outlet bottom (Out-B) coating layers in examples had various compositions and PGMs. These catalyst article examples were made to show the PtPd promotion both in In-T layer for HC/CO oxidation, W promotion with Pt for NO₂ formation in Out-T coating layer and NOₓ adsorption-desorption properties to be utilized for NOₓ removal in bottom layers.

### Activity measurements - Tests

### Method of Testing

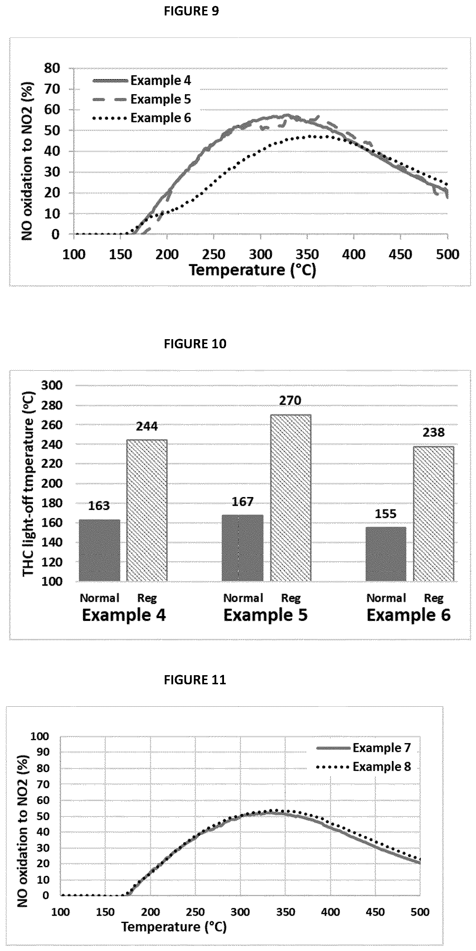

The catalytic activity of small cylinder-shape test size samples (diameter 14mm, length 75mm) was investigated by synthetic gas bench (SGB) experiments. Test size samples were drilled from full-size ceramic substrates (1.2 dm³ in examples) or rolled from coated metallic foil, and then, placed into tubular metal tube reactor. Samples were tested 1) as fresh or 2) after hydrothermal aging (HT) at 700°C for 20 h (H₂O vapor concentration was 10 volume-% during aging) or 3) after hydrothermal (HT) aging at 700°C for 20 h + sulfur dioxide (SO₂) aging at 400°C for 20 hours (SO₂ concentration was 25 ppm during aging). The activity of samples was studied in light-off tests with two gas mixtures, which simulated diesel exhaust gas composition: 1) Normal gas mixture (named as 'normal' in Figs. 10) consisted of 10 ppm C₁₀H₂₂ (decane) 10 ppm C₇H₈ (toluene) 40 ppm C₃H₆ (propene), 300 ppm CO, 500 ppm NO, 10% O₂, 6% H₂O, 6% CO₂, bal. Nitrogen (N₂) and space velocity (SV) was 50.000 h⁻¹ and 2) Regeneration gas mixture (named as 'reg' in Figs. 10) consisted of 4000 ppm C₃H₆, 2000 ppm CO, 200 ppm NO, 6% O₂, 6% H₂O, 6% CO₂, balance N₂ and space velocity was 50.000 h⁻¹. The activity of the samples was tested in THC oxidation where light-off temperature for THC (temperature when 50% THC conversion was achieved) and in NO oxidation to NO₂ during light-off test.

The activity of SGB test samples was studied also in NOₓ adsorption/desorption experiments. Studied samples were first pre-treated at 500°C for 10 min with gas mixture containing 13% O₂, 6% H₂O and balance N₂ followed by cooling down to 120°C in same gas mixture. NO adsorption phase was carried out at 120°C in gas mixture containing 100ppm NO, 13% O₂, 6% H₂O and balance N₂. Then, NOₓ desorption phase was done by heating the sample from 120°C up to 500°C (10°C/min), in gas mixture containing 6% H₂O and balance N₂. Space velocity was 50.000 h⁻¹ during all test phases. The NOₓ adsorption capacity (µmol/g_{coating}) was defined based on measured NOₓ amount during NOₓ adsorption and desorption phases. NOₓ can be adsorbed physically or chemically on catalyst surfaces and adsorbents, e.g. as nitrates or nitrites or their precursors. NOₓ adsorption capacity detected by desorption is related to more strongly bound NOₓ than capacity by step exchange method. NOₓ release by temperature directly showed the adsorption strength, which is an important property in the utilization of NOₓ adsorption for NOₓ control. The total adsorption capacity was calculated by the desorbed NOₓ at 120 - 500°C but in addition it was calculated as low temperature desorption in the range of 120 - 200°C. Relative desorbed NOₓ (0 - 1.0 or 0 - 100%) was defined based on the ratio of desorbed NOₓ (cumulatively) until sample reaching certain temperature (e.g. 200°C) and total amount of desorbed NOₓ during heat up phase.

The catalytic activity of full-size samples (2.5 dm³ in examples) was investigated in diesel engine experiments in steady-state conditions. Samples were studied 1) as fresh or and 2) after hydrothermal aging at 700°C for 5 hours (H₂O vapor concentration of 10 volume% during aging). In engine experiments, exhaust gas emitted from Agco Sisu 4.9L was utilized and space velocity was 50.000 - 250.000 h⁻¹ depending on engine speed and torque. The activity of the samples was studied in NO oxidation NO₂ during steady-state experiment. More precisely each SGB and diesel engine experiment are described in test results in Figures 8-17 and Tables 2-3.

### Test Results

### Test Results in Figure 8

The activity of catalyst article by example 1, coating layer composition by example 2 and the reference catalyst by example 3 was investigated in steady-state engine experiments as fresh. Results are shown in Fig. 8. The results of by examples 1, 2 and 3 differed from each other in respect of NO oxidation to NO₂. NO oxidation to NO₂ over W+Pt comprising layered sample (Example 1) was 6 - 14% higher than over Pt comprising single layer sample (Example 3) at 220 - 380°C. NO oxidation to NO₂ over W+Pt comprising single layer sample (Example 2) was 3 - 6% higher than over Pt comprising single layer sample (Example 3) at 220 - 380 °C. The results clearly show the promotion of tungsten and double-layer structure on NO₂ formation in comparison to single layer sample without tungsten.

### Test Results in Figure 9

The activity of catalyst article by examples 4 and 5 and the reference catalyst by example 6 was investigated in light-off experiments in synthetic gas bench (SGB) as hydrothermally aged at 700°C (HT700). Results are shown in Fig. 9. The results of examples differed from each other in respect of in NO oxidation NO₂. The results relating to effect of tungsten and zone coating on studied catalyst article are presented. Using this invention, the NO oxidation to NO₂ over sample with PtPd in In-T coating layer and W+Pt in Out-T coating layer (Example 4) and sample with W+Pt in top layer (Example 5) was 7 - 20% higher at 210 - 350°C than NO oxidation to NO₂ over PtPd in top layer (Example 6). The results reveal the NO₂ formation improvement by using W+Pt in Out-T coating layer, instead of Pt+Pd.

### Test Results in Figure 10

The activity of catalyst article by examples 4 and 5 and the reference catalyst by example 6 was investigated in light-off experiments in synthetic gas bench (SGB) as HT700 aged. Results are shown in Fig. 10. The catalyst article examples differed from each other in respect of THC light-off temperature. The results relating to effect of tungsten and zone coating on studied catalyst article are presented. Using this invention, the THC light-off temperature on zoned sample with PtPd in In-T coating layer and W+Pt in Out-T coating layer (Example 4) and sample with PtPd in top layer (Example 6) was 4 - 12°C lower than THC light-off temperature on sample with W+Pt in top layer (Example 5) under normal gas mixtures. Under regeneration gas mixtures, THC light-off temperature on examples 4 and 6 samples was 26 - 32°C lower than THC light-off temperature on example 5. The results show that the use Pt+Pd in In-T coating layer is required for high THC oxidation activity at low temperatures.

### Test Results in Figure 11

The activity of catalyst article by example 7 and the reference catalyst by example 8 was investigated in light-off experiments in synthetic gas bench (SGB) as HT700°C aged. The results relating to effect of tungsten and Pt:Pd ratio on catalyst article are presented in Fig 11. Using this invention, sample with PtPd in In-T coating layer and W+Pt in Out-T coating layer (Example 7) was able to reach same the NO oxidation to NO₂ than sample with PtPd in both In-T and Out-T coating layers (Example 8). The results show that samples with high Pt:Pd ratio in Out-T coating layer have same NO₂ formation than samples with W+Pt as HT aged.

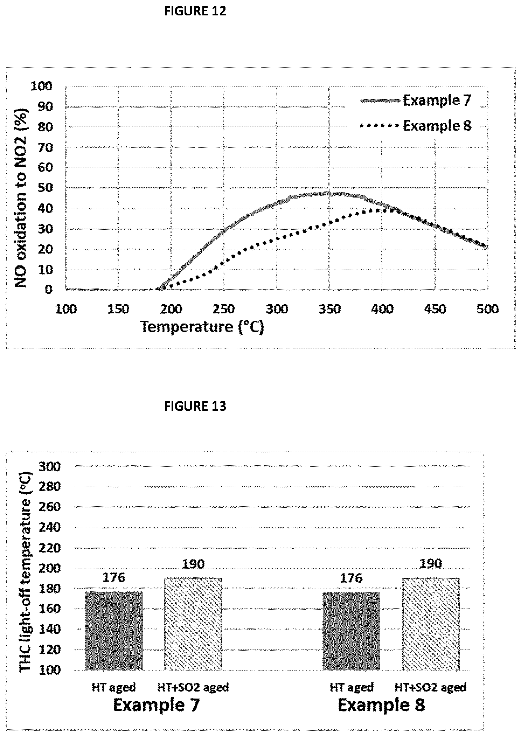

### Test Results in Figure 12

The activity of catalyst article by example 7 and the reference catalyst by example 8 was investigated in light-off experiments in synthetic gas bench (SGB) as HT aged at 700°C for 20 hours and SO₂ aged at 400°C for 20 hours. The results relating to effect of tungsten and Pt:Pd ratio on catalyst article are presented in Fig 12. Using this invention, the NO oxidation to NO₂ over sample with PtPd in In-T coating layer and W+Pt in Out-T coating layer (Example 7) was 10 - 18% higher at 220 - 360°C than NO oxidation to NO₂ over sample with PtPd in both In-T and Out-T coating layers (Example 8). The results show that the use of W+Pt in Out-T coating layer gives good resistance towards sulfur in comparison with Pt+Pd samples (even with high Pt:Pd ratio).

### Test Results in Figure 13

The activity of catalyst article by examples 7 and the reference catalyst by example 8 was investigated in light-off experiments in synthetic gas bench (SGB) as HT aged at 700°C for 20 hours and/or SO₂ aged at 400°C for 20 hours. The results relating to effect of tungsten and Pt:Pd ratio on studied catalyst article are presented in Fig. 13. Using this invention, sample with PtPd in In-T coating layer and W+Pt in Out-T coating layer (Example 7) was enable to reach same the THC light-off temperature (T₅₀) than sample with PtPd in both In-T and Out-T coating layers (Example 8) under normal diesel gas mixture. The results reveal that the use of W+Pt or Pt+Pd in Out-T coating layer give same THC oxidation activity in studied conditions.

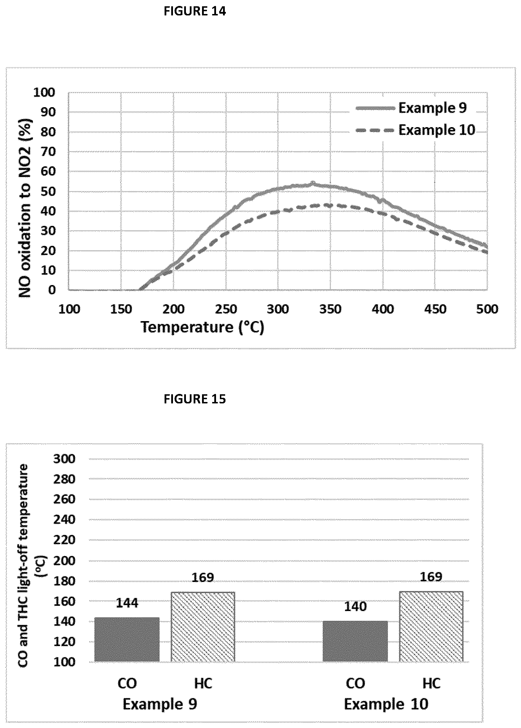

### Test Results in Figure 14

The activity of catalyst article by example 9 and the reference catalyst by example 10 was investigated in light-off experiments in synthetic gas bench (SGB) as HT700 aged. The results relating to effect of tungsten on studied catalyst article are presented in Fig 14. Using this invention, the NO oxidation to NO₂ over sample with W+Pt in Out-T coating layer (Example 9) was 8 - 12 % higher at 230 - 380°C than NO oxidation to NO₂ over sample with only Pt in Out-T coating layer (Example 10). The results show that W promotes the NO₂ formation on studied samples.

### Test Results in Figure 15

The activity of catalyst article by examples 9 and the reference catalyst by example 10 was investigated in light-off experiments in synthetic gas bench (SGB) as HT700 aged. The results relating to effect of tungsten on studied catalyst article are presented in Fig. 15. Using this invention, the sample with PtPd in In-T coating layer and W+Pt in Out-T coating layer (Example 9) reached the same THC light-off temperature (T₅₀) and 4°C higher CO light-off temperature than the sample with only Pt in Out-T coating layer (Example 10) under normal diesel gas mixture. The results show that W has very minor effect on CO and THC oxidation activities on sample containing Pt (no Pd) in Out-T coating layer.

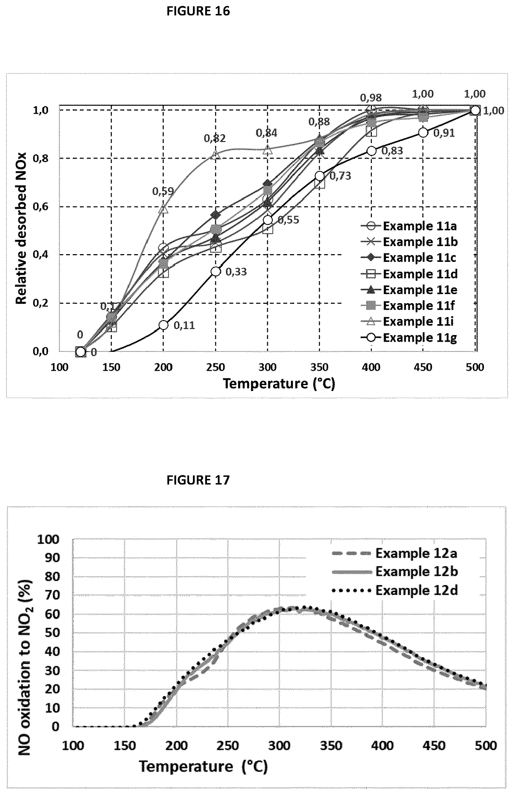

### Test Results in Figure 16 and Table 2 - NOₓ adsorption and desorption capacity

The activity of 2-layer catalyst compositions by examples 11 a-g was investigated in NOₓ adsorption-desorption experiments in synthetic gas bench (SGB) as fresh. These catalyst compositions simulated the various inlet and outlet compositions in the catalyst article. Catalysts were treated in lean conditions at 500°C before NOₓ adsorption step. NOₓ adsorption capacity was shown in the next tables by the results in desorption phase. Using this invention, NOₓ adsorption capacity is increased significantly by adding NOₓ adsorbents (Ce, ZrCe, La with or without Pt; or Pd-zeolite) in bottom layer (Table 2). That increase was reached even if the top layer contained only PGMs, Al oxide and possibly W but the adsorption capacity was calculated by the total weight of bottom and top layer. If alumina only as a support, the adsorption capacity was 9 (w/o Pt) or 19 µmol/g coating materials. The results showed the promotion of Pt presence in Ce layer on NOₓ adsorption capacity at low temperature of 120°C. In situ NO₂ formation on Pt sites as a low concentration near to Ce adsorbent in bottom layer had a promoting effect. The addition of Ce1 in bottom layer with or without Pt/PtPd, the adsorption capacity increases up to 37 - 58 µmol/g (2 - 5 times higher), even if only the bottom layer acted the main adsorption layer. The use of Zr stabilized Ce oxide (ZrCe) resulted in 33 - 50 in µmol NOₓ/g and Pd-ferrierite in 19 µmol NOₓ/g. Pt only versions are aimed for outlet zone and PtPd versions for the inlet zone. The adsorption capacity could be maximized by using NOₓ adsorbent only as a coating, but the purpose of the invention was to optimize the catalyst article for oxidation reactions in normal use or in DPF regeneration as well as for passive NOₓ adsorption-desorption. The presence of all components (PGM, NOₓ adsorbents, W) in the same layer will cause negative effects like lower thermal/sulfur durability, lower Pt stabilization, lower NOₓ adsorption capacity due to component interactions and undesired mass transfer limitations.

The results are applicable for typical lean applications like with exhaust gases with diesel, NG or/and hydrogen fuel combustion. These compositions are operating a kind of passive NOₓ adsorbents, releasing NOₓ during a temperature increase up to about 180 - 250°C.

**Table 2: NOₓ adsorption capacity and desorption at 120 - 200°C with single two-layer catalysts by temperature programmed desorption experiments in the range of 120 - 500°C.**

| Example | Code | Total NOₓ adsorption capacity (120-500°C) µmol NOₓ /g_{coating} | Desorbed at 120-200°C µmol NOx /g_{coating} | Desorbed at 120-200°C % of total capacity |
|---|---|---|---|---|
| 11a | Pt-Al-W / Pt-Ce1 | 47 | 20 | 43 |
| 11b | Pt-Pd-Al / Pt-Ce1 | 58 | 24 | 41 |
| 11c | Pt-Al-W / Ce1 | 37 | 14 | 37 |
| 11d | Pt-Al-W / Pt-ZrCe-La | 50 | 16 | 33 |
| 11e | Pt-Al-W / Pt-ZrCe | 33 | 12 | 37 |
| 11f | Pt-Pd-Al / Pd-Fer | 19 | 7 | 36 |
| 11i | Pt-Al-W / Pt-Ce2 | 109 | 65 | 59 |
| 11h | Pt-Pd-Al / Pt-Ce2 | 88 | 49 | 49 |
| 11g | Pt-Al-W / Pt-AI REF | 19 | 2 | 11 |
| 11j | Pt-Al-W / Al REF | 9 | 3 | 33 |

Based on desorption results at 120 - 500°C, even porous alumina, typical in conventional DOCs, had also a low adsorption capacity but NOₓ was more tightly bound on surface (Table 2, Fig. 16). NOₓ desorption on alumina was low below 200°C (11% desorbed), which is not appropriate for the applications having deNOₓ unit (urea-SCR or LNT) downstream. Oppositely, cerium (Ce1), lanthanum and Pd-Fer containing catalysts released 36 - 43% of adsorbed NOₓ up to 200°C. Even if Pd-Fer containing sample had a lower NOₓ adsorption capacity, near to alumina-based catalysts, the release of NOₓ was high (36%) up to 200°C. A catalyst composing of ZrCe+La, had quite good release but La nitrates are more stable than nitrates on cerium oxides, resulting intermediate adsorption strengths and NOₓ desorption at higher temperatures. La and Ce oxides have more strongly bound nitrates (NOₓ) than alumina at 270 - 380°C but due to three times higher capacity the buffer effect to prevent NOₓ emissions was much higher than on alumina. La is a good in the combination of cerium materials, when buffering of NOₓ emissions is required at higher temperatures. High surface area (> 200 m²/g) Ce2 as NOₓ adsorbent increased the NOₓ adsorption capacity significantly, up to 88 - 108 µmol/g. In addition, the release of NOₓ was also very high with samples 11h and 11i below 200°C, up to 49 - 59%. The main part (> 50%) of desorbed NOₓ in the range of 120 - 200°C was also NO₂, which will have a promoting effect on NH₃-SCR, HC-SCR and HC oxidation reactions at these low temperatures. It is even possible to form NO₂ into exhaust flow at lower temperatures than on Pt-rich top layer or conventional DOCs by desorption from NOₓ adsorbents. This is a benefit from NOₓ adsorption-desorption in the catalyst article. These properties of adsorbing passively NOₓ in lean conditions and oxidizing HC, CO and NO emissions efficiently results in an integrated solution having desired properties in a layered catalyst article.

This kind of a catalyst article can assist SCR catalyst particularly in cold driving conditions, e.g. in World Harmonized Transient Cycle (WHTC) in cold-start conditions, where temperatures are mainly below 200°C for first 400 s. The NOₓ adsorption-desorption utilization can be evaluated by an example with a 4.4L diesel engine, where total raw NOₓ emissions were about 50 grams in that cycle (=4.7 g/kWh). NOₓ adsorption-desorption is utilized in the total system, where an efficient SCR catalyst (e.g. Cu-zeolite based) locates after the catalyst article and desorbed NOₓ is reduced at SCR operation temperatures. When using as an example a catalyst article with a volume of 3.4 dm³, the coating amount of 140 g/L and total adsorption capacity of about 100 µmol NOₓ/g coating (by examples 11h and 11i), the total adsorption capacity will be about 2.2 g NO₂ (at 120°C). Therefore, it can be roughly estimated to have a potential to remove about by 1-3 grams of NO₂ during the first 500 s, when temperature cycles in the range of 50 - 250°C and NOₓ adsorption capacity can be applied 1-3 times in adsorption-desorption cycles. This NOₓ removal potential of the catalyst article is significant, when assisting SCR systems are in cold phases below 180°C, where urea/NH₃-SCR is not yet activated. In cold WHTC, where NOₓ conversions over the cycle will remain often below 90%, a catalyst article gives an opportunity to increase NOₓ conversion efficiency by 2-6%, which gives an essential improvement for total NOₓ removal efficiency.

### Test Results on Table 3

The activity of catalyst article by examples 12a-d was investigated in NOₓ adsorption-desorption experiments in synthetic gas bench (SGB) as fresh. The results of these experiments with 4-layer catalyst articles can be seen in Table 3. Ce2 is a high surface area CeOₓ compound with a small particle size and high NOₓ adsorption capacity. The highest NOₓ adsorption capacity was reached when both inlet and outlet layers contained Ce2 (example 12a). The released NOₓ amount was also high in the temperature range of 120 - 200°C. The use of Pd-Fer as a bottom layer with PtPd-AI as a top layer in the inlet part (example 12c) also showed a high NOₓ adsorption capacity. A reference (example 12d) without NOₓ adsorption compounds showed clearly lower NOₓ adsorption capacity and relative lower NOₓ release at 120 - 200°C. The combinatory promotion was reached when using four layers in the catalyst article. The absolute NOₓ desorption at 120 - 200°C with catalyst articles by the invention was 5 - 8 times higher than with the alumina-based reference. Pd-zeolite has a lower NOₓ adsorption capacity than cerium compounds or other NOₓ adsorbents but a better NOₓ release ability at low temperatures. In addition to NOₓ adsorption, Pd-zeolite has also a role in HC trapping and oxidation to decrease HC emissions in normal drive at low temperatures (< 200°C) or during DPF regeneration. When NOₓ adsorption capacity was calculated in this example for total coating amount, including layers without NOₓ adsorption materials, the NOₓ adsorption capacity in NOₓ adsorbent layers can be evaluated to be about 100 -150 µmol/g with Ce2. Therefore, it is possible to adjust NOₓ adsorption capacity by the coating amount of layers including NOₓ adsorbents. If the NOₓ adsorption capacity is needed at very low temperatures around 100 - 120°C, it is possible to use relatively higher PGM loadings in top or bottom layers, to promote more NO to NO₂ reaction on catalyst surface.

**Table 3: NOₓ adsorption capacity and desorption at 120 - 200°C with 4-layer catalysts by temperature programmed desorption experiments in the range of 120 - 500°C.**

| Example | Code | Total NOx adsorption capacity µmol NOₓ /g_{coating} | Desorbed at 120-200°C, µmol NOₓ /g_{coating} | Desorbed at 120-200°C, % of total capacity |
|---|---|---|---|---|
| 12a | Pt-Pd-Al / Pt-Ce2 // Pt-Al-W / Pt-Ce2 (1:1) | 75 | 41 | 54 |
| 12b | Pt-Pd-Al / Pt-Ce2 // Pt-Al-W / Al (1:1) | 50 | 25 | 49 |
| 12c | Pt-Pd-Al / Pd-Fer // Pt-Al-W / Pt-Ce2 (1:1) | 41 | 26 | 64 |
| 12d | Pt-Pd-Al / Al // Pt-Al-W / Al (1:1) REF | 18 | 5 | 27 |

### Test Results in Figure 17

Correspondingly to previous test diagram, the activity of same catalyst articles by examples 12a, 12b and 12d were investigated in light-off experiments in synthetic gas bench (SGB) as fresh. The effect of these combinations on NO₂ formation are presented in Fig 17. Using this invention, all samples containing NOₓ adsorption materials different locations NOₓ adsorption materials were able to reach same the NO oxidation to NO₂ activity. Besides these tests the examples 12a, 12b and 12d were studied as HT700 aged under regeneration conditions, where it was seen that the THC light-off temperatures of these examples were minor (within 5°C). The results confirm that Ce compounds in bottom layers have minor impact on NO₂ formation and THC conversions on catalyst articles.

The best node according to this invention is given by the examples in which inlet/outlet of the catalyst article is given by examples 12a-c. In these combinations the following features are used:
- layered structure with optimized PGM utilization and coating compositions
- tungsten in outlet distal layer to promote NO₂ formation and to increase stability against sulphur poisoning
- NOₓ adsorption-desorption properties in bottom layer to enhance DeNOₓ function in cold start
- NOₓ adsorption- desorption properties in inlet and outlet bottom (proximal) coating layers to reach high NOₓ adsorption and desorption to promote overall NOₓ removal in deNOₓ units in cold start while a high NO₂ formation and efficient HC oxidation during DPF regeneration conditions is still ensured

The main inventive step is the combination of high NOₓ adsorption-desorption AND high NO₂ formation with high thermal durability and sulphur resistance by combination of the layered structure design with the tungsten dotation in the outlet top layer and the NSC materials in the bottom layer. These inventions were combined to PGM loading and Pt:Pd ratio optimization in coating layers to reach also a high efficiency in DPF active regeneration with high HC concentrations.

### CLOSING COMMENTS

Although the present invention has been described in detail for purpose of illustration, it is understood that such detail is solely for that purpose, and variations can be made therein by those skilled in the art in practicing the claimed subject matter, from a study of the drawings, the disclosure, and the appended claims.

The term "comprising" as used in the claims does not exclude other elements or steps. The indefinite article "a" or "an" as used in the claims does not exclude a plurality. A reference sign used in a claim shall not be construed as limiting the scope.

## Claims

1. A catalyst article for exhaust gas purification in lean exhaust gas conditions presenting a substrate surface, where on said substrate surface are presented an inlet and an outlet coating composition, defined by flow direction, wherein each respective inlet and outlet coating composition comprises at least a respective inlet and outlet proximal coating layer adhering to said substrate surface, and a respective inlet and outlet distal coating layer adhering to the respective inlet and outlet proximal coating layer; said respective coating layers comprise porous Al, Si and/or Ti oxide for diffusive exchange with an exhaust gas traversing for contacting said exhaust gas with said respective catalytic coating layers; wherein
- said inlet proximal (In-B) coating layer is placed at the inlet of the catalyst article and comprises one or more catalytically active metals selected from a platinum-group metal (PGM) comprising Pt, Pd, Rh, Ir, Ru, Os, or noble metals as Ag, or Au at a loading of less than 0.8 g/L
- said inlet distal (In-T) coating layer is placed at the inlet of the catalyst article comprises one or more catalytically active metals selected from a platinum-group metal (PGM) comprising Pt, Pd, Rh, Ir, Ru, Os, Ag, noble metals as Ag, or Au in at a loading of 0.5 - 7.0 g/L
- said outlet proximal (Out-B) coating layer is placed at the outlet of the catalyst article and comprises one or more catalytically active metals selected from a platinum-group metal (PGM) comprising Pt, Pd, Rh, Ir, Ru, Os, or noble metals as Ag, or Au at a loading of less than 0.8 g/L
- said outlet distal (Out-T) coating layer is placed at the outlet of the catalyst article and comprises one or more catalytically active metals selected from a platinum-group metal (PGM) comprising Pt, Pd, Rh, Ir, Ru, Os, or noble metals as Ag, or Au in an amount of 0.1 - 2.0 g/L;
- said outlet distal (Out-T) coating layer comprises tungsten (W), molybdenum (Mo), and/or zirconium (Zr) compounds, more preferably tungsten compounds, to promote NO oxidation to NO₂.

2. A catalyst article according to claim 1 wherein the inlet and/or the outlet proximal (In-B and Out-B) coating layer comprises cerium (Ce) oxides or cerium mixed oxides, such as ZrCe, MnCe, TiCe, PrCe oxides, or their combinations, to promote NOₓ adsorption-desorption and NO₂ formation by desorption below 200°C.

3. A catalyst article according to claim 2 wherein cerium (Ce) oxides or cerium mixed oxides, such as ZrCe, MnCe, TiCe, PrCe oxides, or their combinations, have a high surface area above 140 m²/g, preferably above 200 m²/g, more preferably above 230 m²/g.

4. A catalyst article according to any one of claims 2-3 wherein cerium (Ce) oxides or cerium mixed oxides, such as ZrCe, MnCe, TiCe, PrCe oxides, or their combinations, are in form of solid particles which have a particle size (d₅₀) below 14 µm, preferably below 7 µm.

5. A catalyst article according to any one of claims 1-4 wherein the inlet and/or the outlet proximal (In-B and Out-B) coating layer comprises lanthanum (La), yttrium (Y) and hafnium (Hf) or a combination of them or promote NOₓ adsorption.

6. A catalyst article according to any one of claims 1-5 wherein the inlet and/or the outlet proximal (In-B and Out-B) coating layer comprises Beta, ZSM-5, CHA, Fer and AEI zeolites or a combination of them to promote HC and NOₓ adsorption.

7. A catalyst article according to any one of claims 1-6 wherein middle coating layers, middle proximal (Mid-B) and middle distal (Mid-T), are created in between the inlet and outlet coating compositions.

8. A catalyst article according to any one of claims 1-7 wherein inlet and/or the outlet proximal (In-B and Out-B) coating layers have a length of about 20 - 80% and more preferably about 50% ; inlet and/or the outlet distal (In-T and Out-T) coating layers have a length of about 20 - 80%, preferably about 30 - 70%, more preferably 30 - 70% and In-T is longer than Out-T layer of total length of substrate.

9. A catalyst article according to any one of claims 1-8, where the amount of coating of each coating layer can be about 10 - 200 g/L, preferably about 40 - 100 g/L and more preferably about 50 - 80 g/L in all layers of catalyst article.

10. A catalyst article according to any one of claims 1-9, where the Pt:Pd ratio in inlet distal (In-T) coating layer is in the range of 1:4 - 5:1, preferably 1:1 - 4:1, more preferably 2:1 - 3:1 and the Pt:Pd ratio in outlet distal (Out-T) coating layer is in the range of 3:1 - 30:1, preferably 4:1 - 15:1 and more preferably 5:1 - 10:1 or the Pt:Pd ratio in Out-T coating layer can be also 1:0 (Pt only, no Pd).

11. A catalyst article according to any one of claims 1-10, where inlet distal (In-T) coating layer is more active in oxidation of carbon containing components than outlet distal (Out-T) coating layer, and Out-T coating layer is more active in oxidation of NO to NO₂ than In-T coating layer.

12. A catalyst article according to any one of claims 1-11, which can be utilized in purification of exhaust gas emissions, which are lean in average, originating from the combustion of diesel, gasoline, biofuels, hydrogen, ammonia, natural gas and their combinations and which has an ability to oxidize hydrocarbons (HC), carbon monoxide (CO), hydrogen (H₂), ammonia (NH₃) and nitric oxide (NO) as well as adsorb and desorb nitrogen oxides (NOₓ), sulfur oxides (SOₓ), and hydrocarbons (HCs) or any combinations thereof in regular driving conditions and in particulate filter and catalyst regeneration conditions.
